(19) **Europäisches Patentamt / European Patent Office / Office européen des brevets**

(11) **EP 1 952 913 B1**

(12) **EUROPEAN PATENT SPECIFICATION**

(45) Date of publication and mention
of the grant of the patent:
**20.06.2018 Bulletin 2018/25**

(51) Int Cl.:
**B22D 11/00** (2006.01)  **B22D 11/10** (2006.01)
**C21C 7/04** (2006.01)  **B22D 11/117** (2006.01)

(21) Application number: **06822966.5**

(22) Date of filing: **27.10.2006**

(86) International application number:
**PCT/JP2006/322048**

(87) International publication number:
**WO 2007/049824 (03.05.2007 Gazette 2007/18)**

(54) **METHOD FOR MANUFACTURE OF ULTRA-LOW CARBON STEEL SLAB**

VERFAHREN ZUR HERSTELLUNG EINER PLATTE AUS STAHL MIT SEHR NIEDRIGEM KOHLENSTOFFGEHALT

PROCEDE DE FABRICATION DE PLAQUE D'ACIER A TENEUR ULTRA-FAIBLE EN CARBONE

(84) Designated Contracting States:
**DE FR GB IT**

(30) Priority: **27.10.2005 JP 2005312973**
**21.07.2006 JP 2006199474**

(43) Date of publication of application:
**06.08.2008 Bulletin 2008/32**

(73) Proprietor: **Nippon Steel & Sumitomo Metal Corporation**
**Tokyo 100-8071 (JP)**

(72) Inventors:
• **MIYAZAKI, Masafumi**
**c/o NIPPON STEEL CORPORATION**
**Chiba 2938511 (JP)**
• **MATSUZAWA, Akihiro**
**c/o NIPPON STEEL CORPORATION OITA WORKS**
**Oita shi 8708566 (JP)**
• **SASAI, Katsuhiro**
**c/o NIPPON STEEL CORPORATION**
**Chiba 2938511 (JP)**
• **OHASHI, Wataru**
**c/o NIPPON STEEL CORPORATION**
**Chiba 2938511 (JP)**
• **OHTANI, Yasuhiko**
**c/o NIPPON STEEL CORPORATION KIMITSU WORKS**
**Chiba 2991141 (JP)**

• **YAMADA, Katsunori**
**c/o NIPPON STEEL CORPORATION KIMITSU WORKS**
**Chiba 2991141 (JP)**
• **DOKI, Masahiro**
**c/o NIPPON STEEL CORPORATION KIMITSU WORKS**
**Chiba 2991141 (JP)**
• **HIRATA, Go**
**c/o NIPPON STEEL CORPORATION KIMITSU WORKS**
**Chiba 2991141 (JP)**
• **KIMURA, Yoshiaki**
**c/o NIPPON STEEL CORPORATION KIMITSU WORKS**
**Chiba 2991141 (JP)**
• **HASEGAWA, Hajime**
**c/o NIPPON STEEL CORPORATION KIMITSU WORKS**
**Chiba 2991141 (JP)**

(74) Representative: **Vossius & Partner**
**Patentanwälte Rechtsanwälte mbB**
**Siebertstrasse 3**
**81675 München (DE)**

(56) References cited:
FR-A- 1 587 288    JP-A- 09 225 604
JP-A- 11 123 509    JP-A- 11 123 509
JP-A- 60 180 654    JP-A- 2000 126 849
JP-A- 2000 126 849    JP-A- 2000 343 188
JP-A- 2001 347 348    JP-A- 2002 035 904
JP-A- 2002 035 904    JP-A- 2002 088 412
JP-A- 2002 239 690    JP-A- 2002 254 162

(Cont. next page)

JP-A- 2002 338 347    JP-A- 2002 338 347          JP-A- 2005 060 734    US-B1- 6 675 996
JP-A- 2003 049 218    JP-A- 2005 060 734

JP-A- 2002 338 347    JP-A- 2002 338 347          JP-A- 2005 060 734    US-B1- 6 675 996
JP-A- 2003 049 218    JP-A- 2005 060 734

**Description**

The present invention relates to a method of producing an ultralow carbon cast slab by continuous casting.

The dissolved oxygen in molten steel refined by a converter or vacuum treatment container is generally removed by the deoxidizing element Al. However, if deoxidizing ultralow carbon steel with a large content of dissolved oxygen by Al, alumina ($Al_2O_3$) will form. These agglomerate and merge to form large amounts of coarse clusters of hundreds of microns size or more.

Part of these alumina clusters enter the immersion nozzle from the tundish at the time of continuous casting. If sticking at the inner bore of the immersion nozzle, they cause nozzle clogging and obstruct operation. Further, if the alumina clusters enter the casting mold and remain at the surface layer of the cast slab, they become causes of formation of surface flaws of thin-gauge steel sheet and have a detrimental effect on quality.

As a countermeasure against this, in general there is the method of blowing in Ar gas from a tundish upper nozzle, sliding nozzle, or immersion nozzle to cause the $Al_2O_3$-based inclusions to stick to the surfaces of bubbles, prevent them from sticking at the inner bore of the immersion nozzle, and cause them to float up in the casting mold for removal.

However, with this method, there were the problems that the Ar bubbles blown in became the cause of pinhole defects in the cast slab and that, further, the Ar bubbles floating up in the casting mold disturbed the meniscus and caused powder entrainment, with the entrained powder particles becoming the cause of surface flaws at the thin-gauge steel sheet.

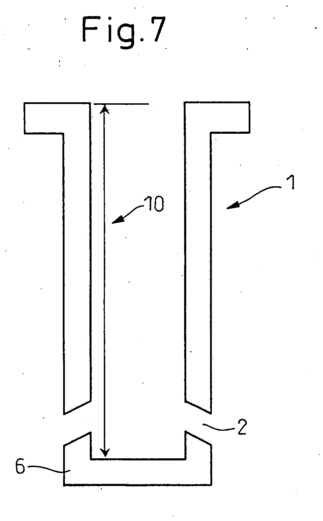

Further, when continuously casting molten steel, from the viewpoint of ease of production, usually, as shown in FIG. 7, an immersion nozzle 1 of a straight shape with a fixed inside diameter from the top end to the bottom end of the inner bore 10 is used.

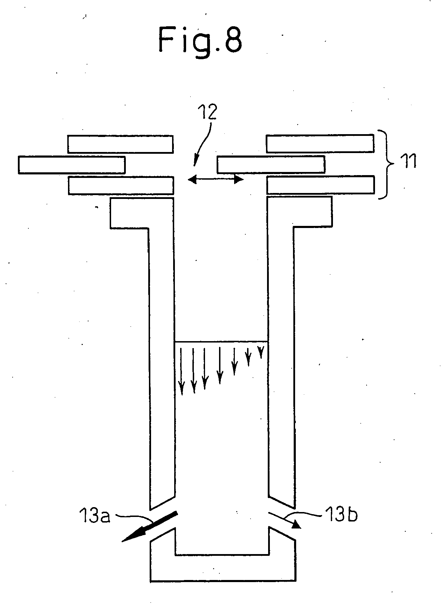

However, in the case of an immersion nozzle with an inner bore of a straight shape, as shown in FIG. 8, the opening part 12 of the sliding nozzle 11 is offset from the center of the immersion nozzle 1, so when the molten steel in the tundish (not shown) passes through the sliding nozzle 11 and flows into the immersion nozzle 1, similarly, as shown in FIG. 8, an uneven distribution of the molten steel flow rate inevitably occurs in the immersion nozzle 1 (in the figure, see downward arrows at the center).

Due to this, there was the problem that uneven flows 13a, 13b with different flow rates occurred at the left and right discharge ports, the state of fluid motion in the casting mold was disturbed, and powder or bubbles were carried to deep positions in the unsolidified part of the molten steel and remained in the cast slab.

To solve these problems, two methods of solution have been disclosed based on prior discoveries. The first is the method of using an immersion nozzle having an orifice in the inner bore for molten steel killed by Al.

This method has as its object the prevention of sticking of alumina in the inner bore and suppression of uneven flow. For example, Japanese Patent Publication (A) No. 2001-239351 discloses an immersion nozzle having a plurality of step differences in its inner bore. Further, Japanese Patent Publication (A) No. 2004-255407 discloses an immersion nozzle having a plurality of discontinuous projections in the inner bore.

Further, in these patent documents, if providing an orifice in the inner bore (step differences or projections), the part in the immersion nozzle where the molten steel flow rate becomes remarkably slow is eliminated and the flow rate is made uniform. As a result, it is disclosed, the effects of suppression of uneven flow and prevention of sticking of alumina are obtained.

Further, Japanese Patent Publication (A) No. 2001-239351 discloses that an inert gas flow rate is suitably 1Nl (normal liter)/min to 40Nl (normal liter)/min. Note that below, "normal liter" will sometimes be simply expressed as "Nl".

The second is the method of preventing the formation of alumina clusters. For example, Japanese Patent Publication (A) No. 2002-88412, Japanese Patent Publication (A) No. 2003-49218, Japanese Patent Publication (A) No. 2003-268435, Japanese Patent Publication (A) No. 2005-60734, and Japanese Patent Publication (A) No. 2005-139492 disclose the method of using Ti and rare earth metals for deoxidation (hereinafter referred to as "deoxidation by Ti-rare earth metals".

This method deoxidizes the molten steel by Ti to form Ti oxides, then adds rare earth metals to change the Ti oxides to spherical inclusions resistant to agglomeration and merger. According to this method, it is possible to prevent sticking of inclusions on the immersion nozzle, clogging of the immersion nozzle, and formation of surface flaws due to alumina clusters.

Further, Japanese Patent Publication (A) No. 11-343516 discloses the method of adding one or both of Ca and a rare earth metal after deoxidation by Ti and continuously casting without blowing in Ar gas. This method as well is a method suppressing the formation of cluster-like inclusions and making the inclusions finely disperse. By this method, it is possible to obtained titanium-killed steel excellent in surface properties.

First, the method disclosed in Japanese Patent Publication (A) No. 2001-239351 and Japanese Patent Publication (A) No. 2004-255407, that is, the method of using an immersion nozzle having an orifice in its inner bore to continuously cast Al-killed molten steel will be explained.

In the technology disclosed in the above patent documents, even if using an immersion nozzle having an orifice in its inner bore, the effect of making the distribution of the flow rate uniform is hard to obtain. This is because in the above art, there is the problem of nozzle clogging.

This reason is that at the part below the bottom end of the orifice, an eddy flow occurs and stirring is caused, so the alumina will not stick, but at the part above the top end of the orifice, no eddy flow occurs,, so sticking of alumina cannot be avoided.

In particular, the top end of the orifice is the location where sticking of alumina progresses the most. If a large amount of alumina-based inclusions stick here, the nozzle will clog.

As disclosed in Japanese Patent Publication (A) No. 2001-239351, if blowing Ar gas into the molten steel, nozzle clogging can be prevented. However, part of the Ar gas blown into the molten steel fills the immersion nozzle and pushes the melt surface in the immersion nozzle (secondary meniscus) down in position.

The molten steel flowing in from the tundish to the immersion nozzle drops freely from the position of the sliding nozzle to the secondary meniscus, but if the secondary meniscus is pushed down, the dropping distance of the molten steel will become longer, so a strong downward flow will easily occur right below the dropping position of the molten steel.

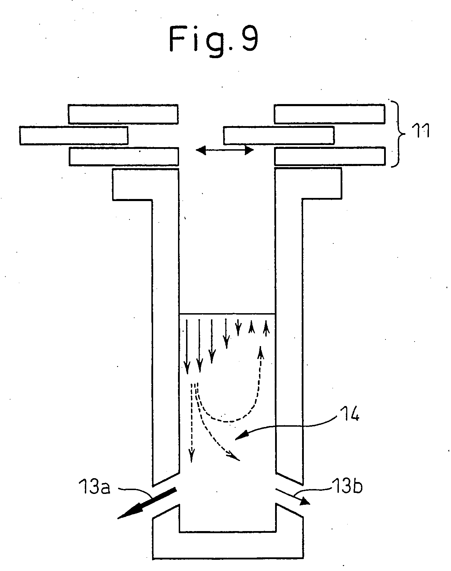

In some cases, as a reaction to this, as shown in FIG. 9, a reverse rising flow 14 (in the figure, see dotted line arrows) occurs whereby an uneven distribution of the molten steel flow rate occurs in the immersion nozzle (in the figure, see solid line arrows).

The uneven distribution of the molten steel flow rate occurring due to the dropping flow of the molten steel is eased if making the secondary meniscus close to the position of the sliding nozzle. However, to obtain the effect of prevention of sticking of alumina, at least a predetermined level of Ar gas flow rate is required. Normally, the Ar gas flow rate is 5 to 20Nl/min, but with this Ar gas flow rate, it is difficult to make the secondary meniscus close to the position of the sliding nozzle.

If the secondary meniscus is low and the distance to the top end of the orifice (in the figure, see "21a") is short, there is the possibility that the molten steel will not stop once at the part above the orifice but will pass through the orifice with the distribution of the flow rate still not made uniform. Accordingly, in the state of a low secondary meniscus, it is difficult to suppress uneven flow caused by a dropping flow by just the orifice.

Next, the method disclosed in Japanese Patent Publication (A) No. 2002-88412, Japanese Patent Publication (A) No. 2003-49218, Japanese Patent Publication (A) No. 2003-268435, Japanese Patent Publication (A) No. 2005-60734, Japanese Patent Publication (A) No. 2005-139492, and Japanese Patent Publication (A) No. 11-343516, that is, the method of continuously casting molten steel not forming any alumina clusters will be explained.

In the art disclosed in the above patent documents, the inclusions are resistant to agglomeration and merger, so no coarse clusters are formed and the nozzle is resistant to clogging. However, in the above patent documents, the shape of the inner bore of the immersion nozzle is not defined. No technical matter relating to the secondary meniscus is described.

In the above art, no means is devised for suppressing uneven distribution of the flow rate and uneven flow, so there is a high possibility of powder or bubbles being carried to deep positions of the unsolidified part of the molten steel and of powder or bubbles remaining in the cast slab becoming a cause of surface flaws formed when worked to a thin-gauge steel sheet.

JP-A-2005-60734, JP-A-2002-88412 and JP-A-2003-49218 disclose a method of casting a low carbon steel slab.

JP-A-60-180654 discloses a method and device for controlling shape of bath surface in mold for continuous casting, in which Ar gas is injected in the nozzle with an amount of total 8 to 9 Nl/min.

In this way, in the prior art, there was the problem that it was difficult to achieve both prevention of nozzle clogging and securing of the cast slab quality. Note that the "securing of the cast slab quality" here means stably producing a cast slab free of surface flaws even if worked to a thin-gauge steel sheet.

The present invention, in consideration of these problems, has as its object the provision of a method of production of an ultralow carbon cast slab enabling achievement of both efficiency of continuous casting and cast slab quality.

The inventors engaged in repeated research to solve the above-mentioned problems and as a result discovered that if deoxidizing ultralow carbon molten steel by Ti-rare earth metals (Ce, La, Nd) and using an immersion nozzle having an orifice in its inner bore, it is possible to prevent nozzle clogging and continuously cast an ultralow carbon cast steel free of surface flaws even if worked to a thin-gauge steel sheet.

The present invention was made based on the above discovery and has as its gist the following constitutions:

(1) A method of production of an ultralow carbon cast slab characterized by adding Ti to molten steel decarburized to a carbon concentration of 0.01 mass% or less, further adding at least one of Ce, La, and Nd, and using an immersion nozzle to inject the above molten steel from a tundish to a casting mold for continuous casting while maintaining a flow rate of Ar gas blown from any location in a range from a tundish upper nozzle to discharge ports of said immersion nozzle at 3Nl min or less so that the uneven distribution of the molten steel flow rate is eliminated

(2) A method of production of an ultralow carbon cast slab as set forth in (1), characterized in that said immersion nozzle has an orifice in its inner bore.

(3) A method of production of an ultralow carbon cast slab as set forth in (2), characterized in that said inner bore has a circular cross-sectional shape and

(i) a relation $3 \leq R-r \leq 30$ stands between a radius R of a top end of the inner bore [mm] and a smallest radius r of the orifice [mm] and
(ii) a length L from a top end to a bottom end of the orifice [mm] is $50 \leq L \leq 150$.

(4) A method of production of an ultralow carbon cast slab as set forth in (2), characterized in that said inner bore has an elliptical cross-sectional shape and

(i) a relation $3 \leq A-a \leq 30$ stands between a radius A of a long-axis direction of a top end of the inner bore [mm] and a smallest radius a of the orifice [mm] and
(ii) a length L from a top end to a bottom end of the orifice [mm] is $50 \leq L \leq 150$.

(5) A method of production of an ultralow carbon cast slab as set forth in (1) or (2), characterized in that said immersion nozzle has a closed bottom cylindrical shape and

(i) two discharge ports are arranged at axially symmetric positions to a cylinder at a bottom part of side walls of the cylindrical shape and
(ii) a slit is provided connecting a cylinder bottom part and bottom parts of the two discharge ports and opening to the outside.

(6) A method of production of an ultralow carbon cast slab as set forth in (5), characterized in that, in said immersion nozzle,

(i) portions contiguous with the slit of the cylinder bottom part are inclined upward toward the cylinder side walls
(ii) portions contiguous with the slit of discharge port bottom parts are inclined upward toward discharge port side walls, and
(iii) there is substantially no step difference between the surface forming the cylinder bottom part and the surfaces forming the discharge port bottom parts.

(7) A method of production of an ultralow carbon cast slab as set forth in (6), characterized in that, in said immersion nozzle, an inclination angle by which "portions contiguous with the slit" of the cylinder bottom part head toward the cylinder side walls and an inclination angle by which "portions contiguous with the slit" of the discharge port bottom parts head toward discharge port side walls are both at least 30° upward.

(8) A method of production of an ultralow carbon cast slab as set forth in any.one of (5) to (7), characterized in that, in said immersion nozzle, portions of the top parts of the discharge ports contiguous with the side walls of the cylinder are formed by curved surfaces smoothly contiguous with the side walls of the cylinder.

(9) A method of production of an ultralow carbon cast slab as set forth in any one of (5) to (8), characterized in that said immersion nozzle is provided with a rib connecting the two side surfaces of the slit.

(10) A method of production of an ultralow carbon cast slab as set forth in any one of (5) to (9), characterized in that, in said immersion nozzle, the slit has an opening width of 0.15 to 0.40 of a square root of the cross-sectional area of the discharge port openings.

(11) A method of production of an ultralow carbon cast slab as set forth in any one of (1) to (10), characterized in that, in said immersion nozzle, the side surfaces and bottom part of the cylinder and part or all of the surfaces of the discharge ports and slit contiguous with the melt are formed by a material of any of carbon-less spinel, low-carbon spinel, magnesia graphite, zirconia graphite, and silica-less alumina graphite.

According to the present invention, in continuous casting of ultralow carbon steel, it is possible to prevent nozzle clogging and produce an ultralow carbon cast slab free of surface flaws even if worked to a thin-gauge steel sheet. The invention is described in detail in conjunction with the drawings, in which:

FIG. 1 is a view showing an immersion nozzle having an orifice used in the present invention,
FIG. 2 is a view showing an immersion nozzle with a circular cross-sectional shape and having an orifice in its inner bore,

FIG. 3 is a view showing an immersion nozzle with an elliptical cross-sectional shape and having an orifice in its inner bore,

FIG. 4 is a view for explaining a preferable set position of an orifice,

FIG. 5 is a view showing an immersion nozzle with a circular cross-sectional shape and having two orifices.

FIG. 6 is a view showing an immersion nozzle with an elliptical cross-sectional shape and having two orifices,

FIG. 7 is a view showing a generally used immersion nozzle with a straight shape with an inside diameter fixed from the top end to the bottom end of the inner bore,

FIG. 8 is a view showing an uneven distribution of the molten steel flow rate occurring when using the immersion nozzle shown in FIG. 7,

FIG. 9 is a view showing an uneven distribution of the molten steel flow rate and a state of a reverse rising flow occurring due to a strong dropping flow,

FIG. 10 is a view showing the relationship between an Ar gas flow rate and pinhole defects occurring in a cast slab;

FIG. 11 is a view showing the relationship between an Ar gas flow rate and surface flaws occurring in a steel sheet;

FIG. 12 gives views showing an immersion nozzle, used in the present invention, having a closed bottom cylindrical shape, having two discharge ports at axially symmetric positions to the cylinder at the bottom of the side walls of the cylindrical shape, and provided with a slit connecting the bottom of the cylinder and the bottoms of the two discharge ports and opening to the outside, (a) is a view showing an A-A cross-section, (b) is a view showing a B-B cross-section, and (c) is a view showing a C-C cross-section,

FIG. 13 gives views showing part of an immersion nozzle, (a) is a view showing an A-A cross-section, (b) is a view showing a B-B cross-section, (c) is a view showing a C-C cross-section, (d) is a view showing a D-D cross-section,

FIG. 14 gives views showing part of another immersion nozzle, (a) is a view showing an A-A cross-section, (b) is a view showing a B-B cross-section, (c) is a view showing a C-C cross-section, and (d) is a view showing a D-D cross-section,

FIG. 15 gives views showing part of another immersion nozzle, (a) is a view showing an A-A cross-section. (b) is a view showing a B-B cross-section, (c) is a view showing a C-C cross-section,

FIG. 16 gives views showing part of another immersion nozzle, (a) is a view showing an A-A cross-section, (b) is a view showing a B-B cross-section, and (c) is a view showing a C-C cross-section,

FIG. 17 gives views showing part of another immersion nozzle, (a) is a view showing an A-A cross-section, (b) is a view showing a B-B cross-section, (c) is a view showing a C-C cross-section, and (d) is a view showing a D-D cross-section;

FIG. 18 gives views another immersion nozzle used in the present invention, (a) is a view showing an A-A cross-section, (b) is a view showing a B-B cross-section; and (c) is a view showing a C-C cross-section,

FIG. 19 gives views showing part of another immersion nozzle, (a) is a view showing an A-A cross-section, (b) is a view showing a B-B cross-section. (c) is a view showing a C-C cross-section, (d) is a view showing a D-D cross-section, and

FIG. 20 gives views showing part of another immersion nozzle, (a) is a view showing an A-A cross-section, (b) is a view showing a B-B cross-section, (c) is a view showing a C-C cross-section, and (d) is a view showing a D-D cross-section.

To solve the problems in the prior art, the following three conditions are major requirements:

Condition 1: Prevention of agglomeration and merger of inclusions to prevent formation of clusters.
Condition 2: Making position of secondary meniscus close to sliding nozzle as much as possible.
Condition 3: Using an immersion nozzle having an orifice in its inner bore and/or an immersion nozzle having a slit at its bottom.

First, as explained in the section of BACKGROUND ART, coarse clusters become causes of nozzle clogging and surface flaws in thin-gauge steel sheet, so Condition 1 has as its object the prevention of formation of clusters.

Next, Condition 2 has as its object the suppression of uneven distribution of the flow rate occurring due to a dropping flow. The closer the position of the secondary meniscus to the position of the sliding nozzle, the shorter the dropping distance of the molten steel, so the more difficult the formation of a strong downward flow. The uneven distribution of the flow rate due to the dropping flow is substantially suppressed.

In the present invention, deoxidization by Ti-rare earth metals (Ce, La, Nd) enables the prevention of formation of clusters and prevention of occurrence of nozzle clogging at the casting stage.

For this reason, it is possible to greatly reduce the Ar gas flow rate from the Ar gas flow rate at the time of casting Al-killed molten steel. As a result, the secondary meniscus can be made close to the position of the sliding nozzle. Further, at the time of casting, if using an immersion nozzle having an orifice in its inner bore, the molten steel flow rate will be made even and uneven flow will be suppressed.

Condition 3 relating to the immersion nozzle used has as its object the elimination of-the uneven distribution of the flow rate occurring due to the sliding nozzle.

If setting the orifice in the inner bore of the immersion nozzle, the molten steel will stop once at the part above the orifice, so during this time, the uneven distribution of the flow rate will be eliminated.

If using an immersion nozzle having an orifice in its inner bore and having a slit at its bottom part, the uneven distribution of the flow rate will be eliminated, so powder or bubbles will not be carried into deep positions of the unsolidified part of the molten steel. As a result, the occurrence of surface flaws of the steel sheet due to powder or bubbles remaining in the cast slab (occurring when working the cast slab into steel sheet) can be prevented.

When Condition 2 and Condition 3 are simultaneously satisfied, the molten steel remains for a relatively long time between the secondary meniscus and the top end of the orifice, so the effect of rectification of the flow by the orifice is improved more.

Note that the presence of occurrence of an uneven flow is usually evaluated using the difference in the coefficient of heat transfer at the two short sides of the casting mold. The coefficient of heat transfer is an indicator showing the ease of transfer of heat through the wall surfaces. If the difference in the coefficient of heat transfer of the two short sides of the casting mold is $250 J/(m^2 \cdot s \cdot K)$ or more, "asymmetric fluid motion of the molten steel", that is, "uneven flow", occurs as learned from experience.

The method of calculation of the coefficient of heat transfer is shown in formula (1) and formula (2). The coefficient of heat transfer $h$ [$J/(m^2 \cdot s \cdot K)$] is calculated from the amount of heat removal $q$ of the casting mold [$J/(m^2 \cdot s)$] and the temperature difference (Too-TMD) between the molten steel and the casting mold surface [K]. The amount of heat removal $q$ of the casting mold is calculated from the change in temperature (tout-tin) before the casting mold cooling water passes over the copper plates and after it passes over it [K], the cooling water flow rate Qw [kg/s], the specific heat Cw of water [$J/(kg \cdot K)$], and the copper plate surface area S [$m^2$].

$$h = q/(T\infty - TMD) \quad (1)$$

$$q = QwCw(tout - tin)/S \quad (2)$$

Below, the present invention will be explained in detail.

The present invention covers ultralow carbon steel. The upper limit value of the carbon concentration is not particularly limited, but thin-gauge steel sheet of ultralow carbon steel is used for steel sheet for automobiles etc. subjected to severe working, so has to be provided with superior workability. For this reason, the carbon concentration is preferably 0.01 mass% or less. Note that the lower limit value of the carbon concentration is not particularly defined.

In the present invention, in the secondary refining, the steel is decarburized to a carbon concentration of 0.01 mass% or less, then Ti is added to the molten steel for deoxidation. The amount of addition of the Ti is preferably 0.04 mass% or more. If less than 0.04 mass%, the deoxidation does not sufficiently occur and there is a high possibility of dissolved oxygen remaining in the molten steel.

In secondary refining, when decarburizing steel to a carbon concentration of 0.01 mass% or less, it is also possible to deoxidize the steel by Al preliminarily before the decarburization in the refining apparatus, for example, at the stage of refining by the converter. In this case, the Al concentration after deoxidation is made 0.01 mass% or less, preferably 0.008 mass% or less, more preferably 0.006 mass% or less.

If the Al concentration after deoxidation is 0.01 mass% or less, the deoxidation product, that is, alumina, floats up to the surface of the molten steel in the interval until continuously casting the molten steel and can be removed, so the amount of alumina remaining in the molten steel during casting becomes smaller and the problems of nozzle clogging etc. do not occur.

Further, if the Al concentration after deoxidation is 0.008 mass% or less, the amount of alumina remaining in the molten steel during casting becomes smaller, so this is preferable. Further, if the Al concentration after deoxidation is 0.006 mass% or less, the amount of alumina remaining in the molten steel during casting becomes even smaller, so this is more preferable.

On the other hand, the upper limit of the amount of addition of Ti is not particularly defined. The Ti oxides produced by addition of Ti are harder to aggregate and merge than $Al_2O_3$-based inclusions, but easily stick to the refractory, so nozzle clogging is a concern.

Therefore, after deoxidizing the molten steel by Ti, at least one of Ce, La, and Nd is added. By this addition, the Ti oxides become hard to agglomerate and merge and are converted to spherical inclusions hard to stick to the refractory.

The total amount of addition of Ce, La, and Nd is preferably 0.001 mass% to 0.01 mass%. If the above total amount of addition is less than 0.001 mass%, the modification of the Ti oxides becomes insufficient and spherical inclusions hard to agglomerate and merge become hard to form. Further, if over 0.01 mass%, the modification of the Ti oxide becomes excessive, the Ti-based inclusions become heavier in specific gravity and become harder to float up, and the cleanliness of the molten steel deteriorates.

Rare earth metals other than Ce, La, and Nd (for example, Pr, Sm, etc.) do not have effects of modification equal to those of Ce, La, and Nd, so for modification of the Ti oxides, addition of one or more of Ce, La, and Nd is effective.

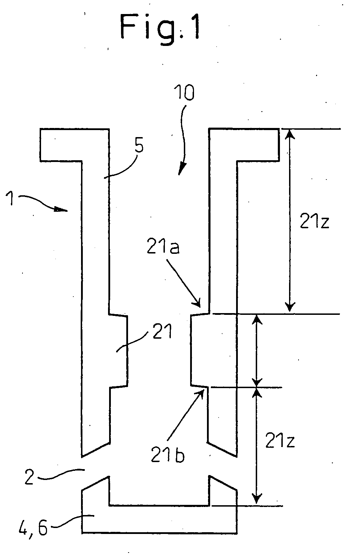

Here, FIG. 1 shows an immersion nozzle having an orifice used in the present invention. In the present invention, the portion of the inner bore 10 smaller in inside diameter than the top end of the inner bore is defined as the "orifice 21", while any portion with an inside diameter equal to the top end of the inner bore or with an inside diameter larger than the same is defined as a "non-orifice part 21z". At the interfaces of the orifice 21 and the non-orifice parts 21z, the boundary at the upstream side is referred to as the "orifice top end 21a" and the boundary at the downstream side is referred to as the "orifice bottom end 21b".

As explained above, in the present invention, the Ar gas flow rate can be greatly reduced from the time of the conventional Al deoxidation. If reducing the Ar gas flow rate, the secondary meniscus rises. When reaching 3Nl/min or less, the secondary meniscus rises to a position of about 100 to 120 mm from the sliding nozzle.

If the secondary meniscus rises to the above position, almost no strong downward flow occurs and the distance to the orifice top end can be sufficiently secured, so it is possible to reliably eliminate uneven distribution of the molten steel flow rate. This fact was discovered by the inventors. Note that as the value of the Ar gas flow rate in the present invention, it is possible to use a value measured using a commercially available flowmeter.

The smaller the Ar gas flow rate, the more the secondary meniscus rises, so the Ar gas flow rate is preferably 2Nl/min or less, more preferably less than 1Nl/min.

If the Ti oxides are all suitably modified, almost no sticking of Ti oxides to the immersion nozzle will occur, so the lower limit value of the Ar gas flow rate also includes 0Nl/min.

Ar gas is generally blown in from one or more of a tundish upper nozzle, sliding nozzle, or immersion nozzle, but if in the range from the tundish upper nozzle to immersion nozzle discharge ports, the positions of the locations where the Ar gas is blown in and the number of those locations may be freely selected.

In the immersion nozzle used in the present invention, to more remarkably secure the effect of suppression of an uneven flow, there is a preferable range of orifice size.

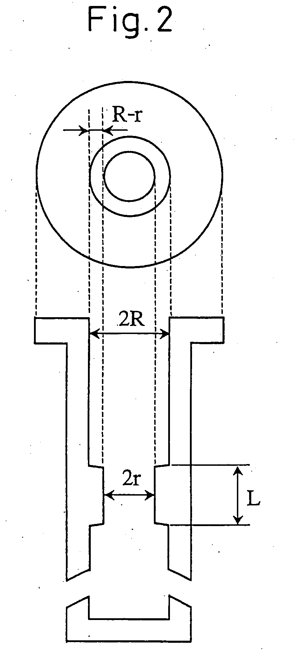

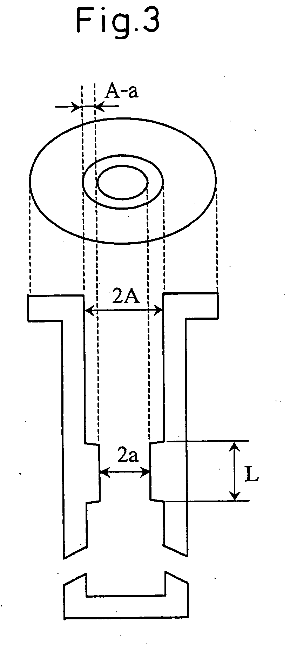

As the cross-sectional shape of the immersion nozzle, normally a circular or elliptical shape is used. FIG. 2 shows an immersion nozzle with a circular cross-sectional shape, while FIG. 3 shows an immersion nozzle with an elliptical cross-sectional shape.

When the cross-sectional shape is circular, the radius of the top end of the inner bore is defined as R [mm] and the smallest radius of the orifice is defined as r [mm]. On the other hand, when the cross-sectional shape is elliptical, the radius of the top end of the inner bore in the long axis direction is defined as A [mm] and the smallest radius of the orifice in the long axis direction is defined as $\underline{a}$ [mm].

Here, for the orifice, the smallest radius is used because in the present invention, an orifice is defined as a "portion smaller in inside diameter than the top end of the inner bore".

As the shape of the orifice, even a shape with an inside diameter not fixed from the top end to the bottom end of the orifice may be envisioned, so the smallest radius was used to define it so that the invention can be applied even to such a shape.

Next, the difference between the radius of the non-orifice parts and the smallest radius of the orifice is defined as the "height of the orifice". Normally, the radius of the non-orifice parts is equal to the radius of the top end of the inner bore, so the "height of the orifice" can be alternately referred to for the difference between the radius of the top end of the inner bore and the smallest radius of the orifice.

This being so, the "height of the orifice" is expressed by "R-r" when the immersion nozzle has a circular cross-sectional shape and "A-a" when it has an elliptical one.

Further, the distance from the top end to the bottom end of the orifice is defined as the "length of the orifice" and labeled L [mm].

When the immersion nozzle has a circular cross-sectional shape, the "height of the orifice" preferably satisfies the relation "3≤R-r≤30". The range of R-r<3 results in a small effect of the orifice in making the flow rate uniform and difficulty in suppressing the uneven flow, while the range of R-r>30 results in a remarkably larger flow rate of the molten steel passing through the orifice and the fluid motion in the casting mold is easily detrimentally affected.

Next, the length L of the orifice [mm] preferably satisfies the relation 50≤L≤150. With a range of L<50, before the flow rate is made uniform, the molten steel ends up passing through the orifice, so suppression of an uneven flow is difficult. Further, with a range of L>150, the part of the small inside diameter becomes longer, so the flow rate of the molten steel becomes remarkably greater and the fluid motion in the casting mold is easily detrimentally affected.

When the immersion nozzle has an elliptical cross-sectional shape, the "height of the orifice" preferably satisfies the relation "3≤A-a≤30", while the length L of the orifice [mm] preferably satisfies the relation "50≤L≤150". The reason is similar to the case where the cross-sectional shape is circular.

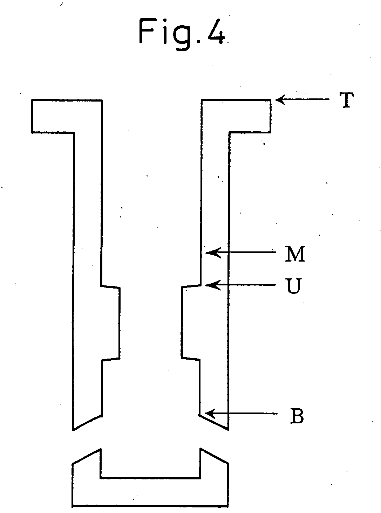

In the immersion nozzle used in the present invention, the position of the orifice is not particularly limited. However, as shown in FIG. 4, if the top end U of the orifice is below the mid point M of the top end T of the inner bore and the top ends B of the discharge ports, the molten steel can be made to reliably stop and the uneven distribution of the flow rate can be easily eliminated, so this is preferred.

Further, the number of the orifices is preferably a plurality rather than one so the flow rectification effect becomes greater. However, if the number of orifices becomes greater, the parts where the flow rate of the molten steel is large will increase, so one or two is preferable.

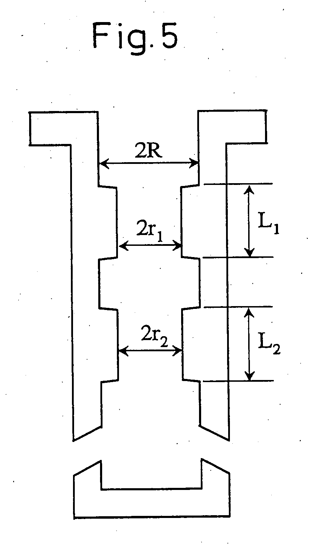

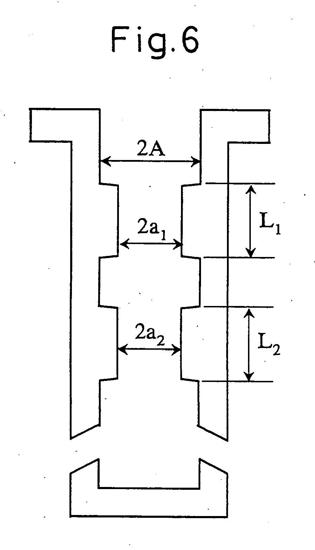

FIG. 5 and FIG. 6 show immersion nozzles with two orifices.

When providing a plurality of orifices in an inner bore with a circular cross-sectional shape (see FIG. 5), the r and L of each i-th orifice from the top end of the inner bore (respectively labeled as "ri" and "Li") preferably satisfy the conditions $3 \leq R-ri \leq 30$ and $50 < Li < 150$.

Further, the top end of at least one of the orifices is preferably below the mid point of the top end of the inner bore and the top ends of the discharge ports.

When providing a plurality of orifices in an inner bore with an elliptical cross-sectional shape (see FIG. 6), the a and L of each i-th orifice from the top end of the inner bore (respectively labeled as "ai" and "Li") preferably satisfy the conditions $3 \leq A-ai \leq 10$ and $50 \leq Li \leq 150$.

Further, the top end of at least one of the orifices is preferably below the mid point of the top end of the inner bore and the top ends of the discharge ports.

Here, other embodiments of the immersion nozzle used in the present invention will be explained.

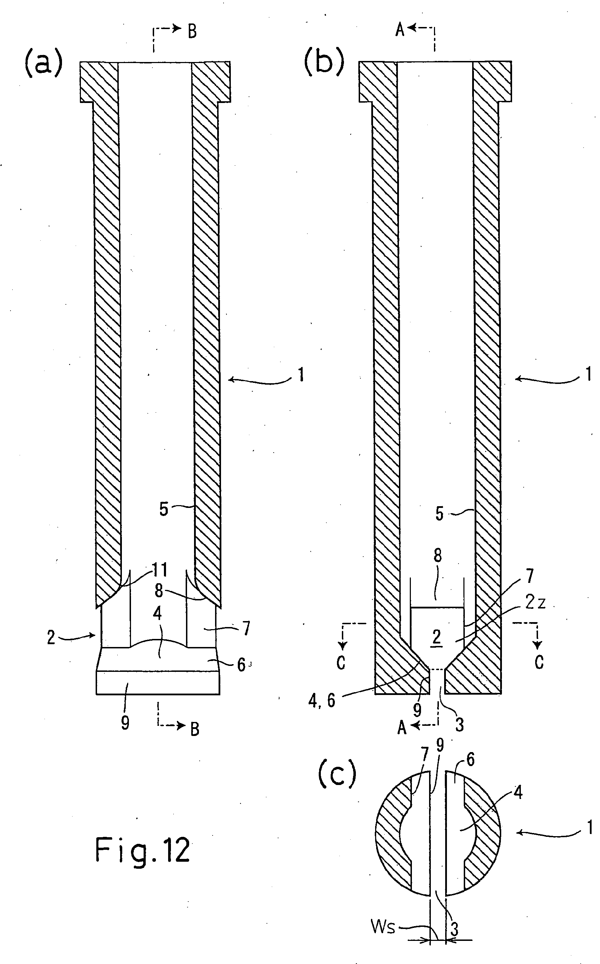

FIG. 12 shows an embodiment of an immersion nozzle of another embodiment. The immersion nozzle 1 shown in FIG. 12 is a closed bottom cylindrical shape immersion nozzle. At the bottom part of the cylindrical side walls 5, two discharge ports 2 formed by discharge port side walls 7 and discharge port top parts 8 are formed symmetrically with respect to the cylindrical axis, while at the cylinder bottom part 4 and the bottom parts 6 of the discharge ports 2, a slit 3 formed by slit side walls 9 and opening to the outside is provided.

If providing a slit in an immersion nozzle, the discharge flow of the molten steel into the casting mold is more uniformly dispersed, the uneven flow is eliminated more, and further entrainment of powder is more stably prevented, so this is more preferable. Here, there is a suitable relation between the opening width Ws of the slit 3 and the square root of the cross-sectional area Sz of the opening part 2z of a discharge port 2 due to the reasons explained below.

First, if the slit opening width Ws/√(cross-sectional area Sz of opening of discharge port) is over 0.4 and the slit 3 becomes larger than the discharge port 2, the flow rate of the molten steel passing through the slit 3 increases. Bubbles, inclusions, etc. in the molten steel are carried to deep positions of the unsolidified parts of the molten steel, remain in the casting mold, and become causes of surface flaws at the time of working into a thin-gauge steel sheet.

On the other hand, if the slit opening width Ws/√(cross-sectional area Sz of opening of discharge port) is less than 0.1, sticking of inclusions at the slit side walls 9, abrasion of the slit side walls 9, etc. sometimes occur.

Due to the above reasons, the slit opening width Ws/√(cross-sectional area Sz of opening of discharge port) is suitably 0.15 to 0.4.

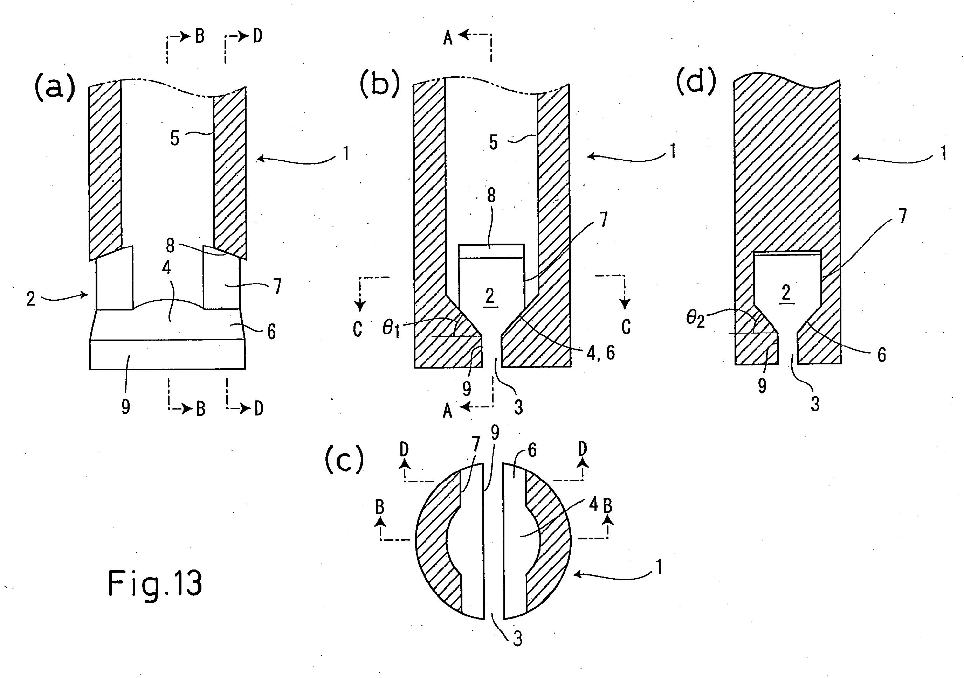

FIG. 13 shows an embodiment of a bottom part of the immersion nozzle shown in FIG. 12. In the immersion nozzle shown in FIG. 13, the portions of the cylinder bottom part 4 contiguous with the slit 3 are inclined toward the cylindrical side walls 5 by an inclination angle $\theta_1$, while the portions of the bottom parts 6 of the discharge ports contiguous with the slit 3 are inclined toward the side walls 7 of the discharge ports by an inclination angle $\theta_2$.

The inclination angles ($\theta_1$ and $\theta_2$) are preferably 30 to 60°. If the inclination angles are less than 30°, an eddy is formed in the immersion nozzle in some cases. If the inclination angles are over 60°, the top parts of the discharge ports approach the meniscus in the casting mold and the discharge flow easily entrains powder. Note that the inclination angles are preferably 30° or more.

The inclination angle $\theta_1$ of the cylinder bottom part 4 and the inclination angle $\theta_2$ of the discharge port bottom parts 6 preferably match, but they do not necessarily have to match. The difference in angle when the inclination angle $\theta_1$ and the inclination angle $\theta_2$ do not match is preferably 10° or less. Further, if the surface of the cylinder bottom part 4 and the surfaces of the discharge port bottom parts 6 are formed to be on the same plane, the structure of the immersion nozzle becomes simpler so this is preferable.

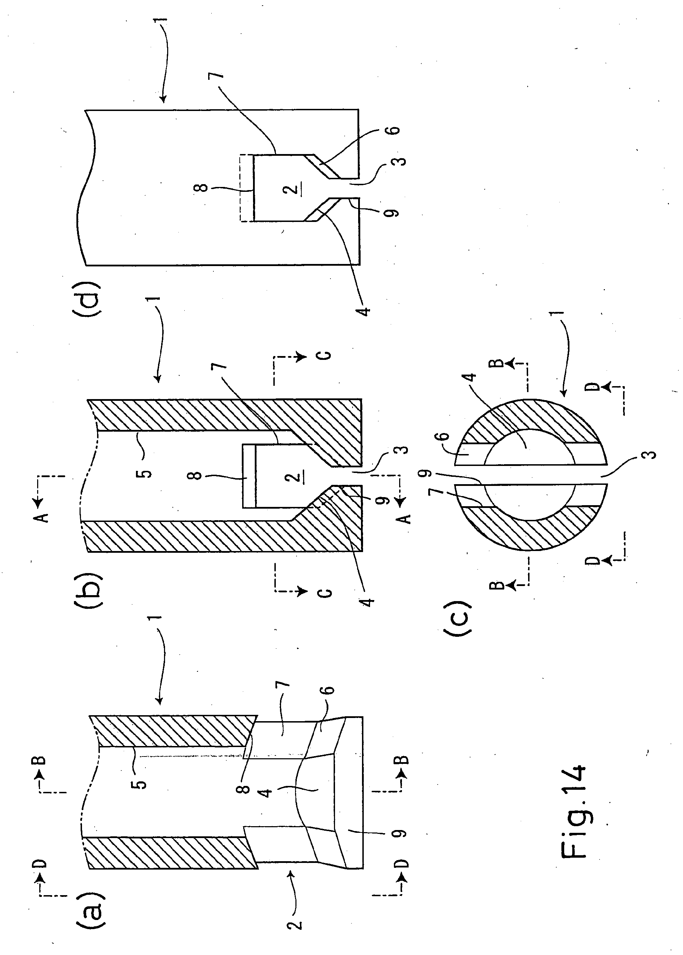

On the other hand, as shown in FIG. 14, the surface of the cylinder bottom part 4 and the surfaces of the discharge port bottom parts 6 may be connected at the required angle if providing a step difference at the connecting surfaces. As shown in FIG. 14, if forming the discharge port bottom parts 6 in directions descending toward the outer circumference of the immersion nozzle, it is possible to adjust the directions of the discharge flows of the discharge ports 2 along with the inclinations of the discharge port top parts 8.

Regarding the step difference between the surface of the cylinder bottom part 4 and the surfaces of the discharge port bottom parts 6, substantially no step difference is enough. There is no need to completely eliminate the step differences. Here, "substantially no step difference" means the step difference is a step difference of an extent whereby the continuity of the downward flow in the immersion nozzle 1 and the discharge flows from the discharge ports 2 is not impaired. Specifically, the step difference should be of an extent of 5 mm or less.

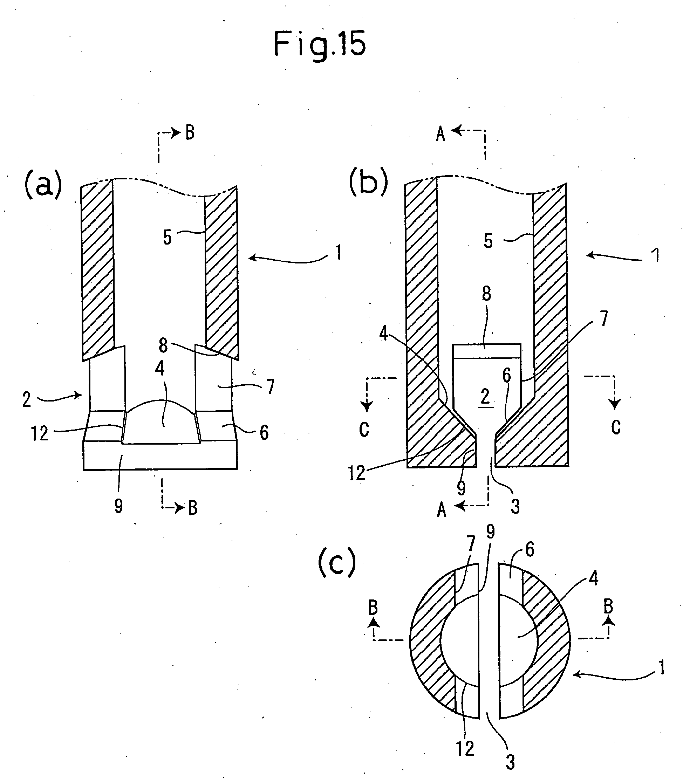

As shown in FIG. 15, even if there is a slight step difference 12 between the surface of the cylinder bottom part 4 and the surfaces of the discharge port bottom parts 6, the effect of the present invention is not impaired.

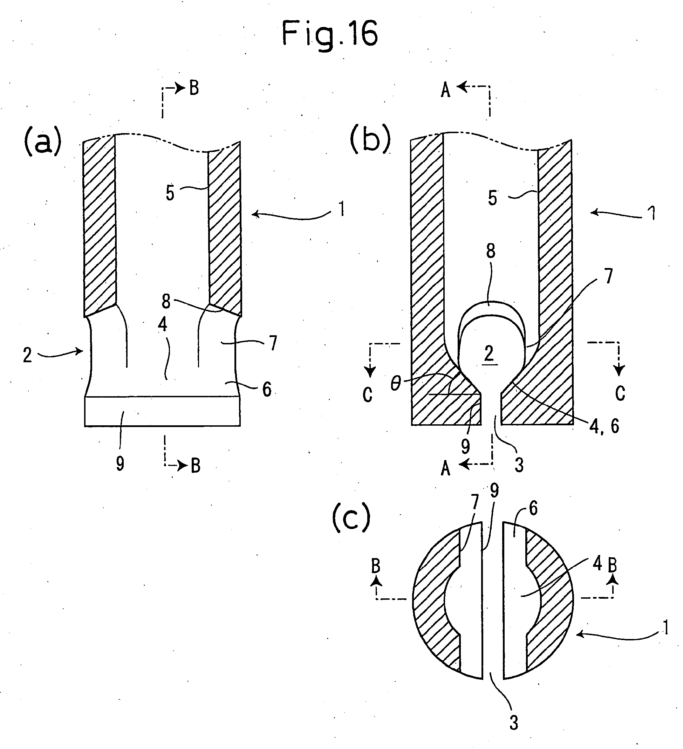

The discharge ports 2 are preferably shaped, as shown in FIG. 12 to FIG. 15, like baseball home plates, but as shown in FIG. 16 may also be arc shapes or curved shapes. The surface of the cylinder bottom part 4 may also be curved. In this case, the inclination angle $\theta_1$ of the cylinder bottom part 4 and the inclination angle $\theta_2$ of the discharge port bottom parts 6 should be made the average inclination angle of the vicinity where the cylinder bottom part 4 or discharge port bottom parts 6 contact the slit.

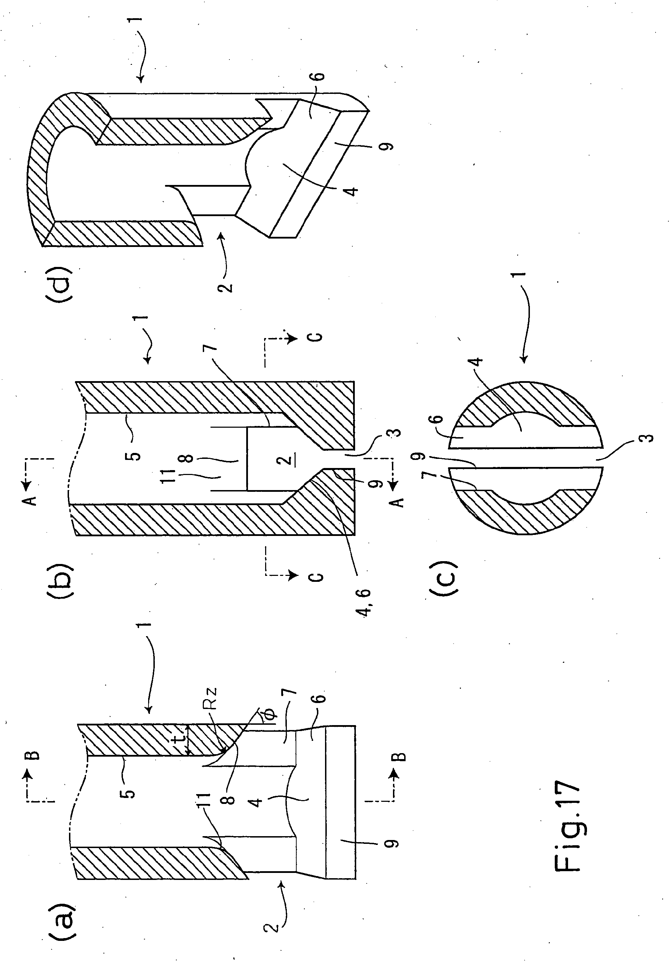

The portions of the discharge port top parts 8 contacting the cylinder side walls 5, as shown in FIG. 17, are preferably formed by curved surfaces 11 smoothly contiguous with the cylinder side walls 5. By forming the above portions by curved surfaces, the discharge flow separating from the discharge port top parts 2 can be prevented and entrainment of powder into the discharge ports 2 can be suppressed.

The radius of curvature Rz of the curved surface 11 smoothly connecting the discharge port top parts 8 and the cylinder side walls 5, as shown FIG. 17, is determined by the thickness t of the cylinder side walls 5 and the discharge angle $\phi$. If making $\phi$ small, a problem occurs in the strength of the material forming the immersion nozzle, but Rz can be made larger, so this is advantageous for prevention of divergence of the discharge flow. For example, in the case where $\phi=45°$ or so, the radius of curvature Rz is preferably 50 to 100 mm.

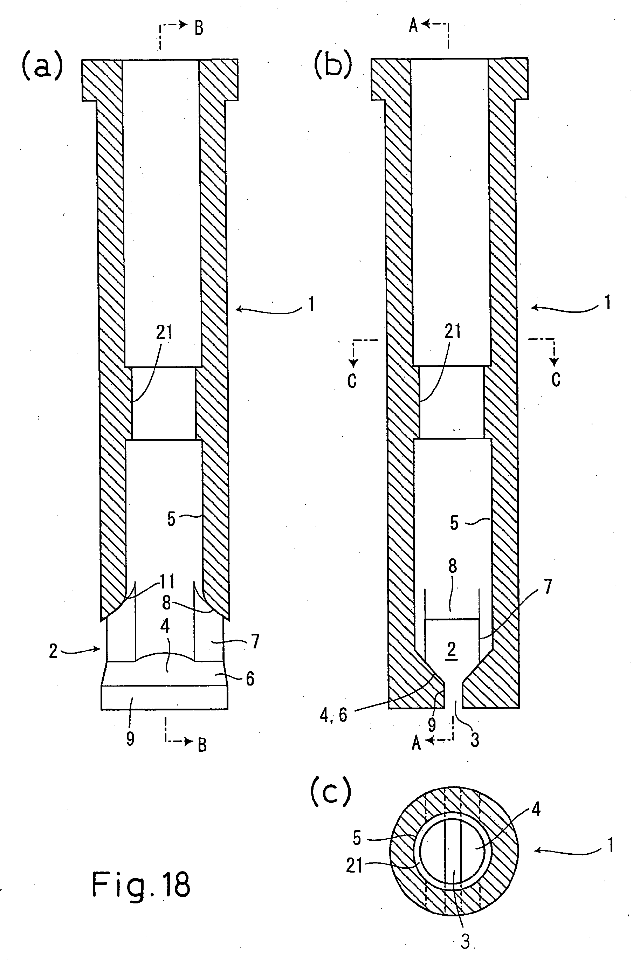

Further, as the immersion nozzle used in the present invention, as shown in FIG. 18, one having an orifice 21 with an opening cross-sectional area smaller than the opening cross-sectional area of the cylinder between the top end of the nozzle and the discharge ports 2 is preferable.

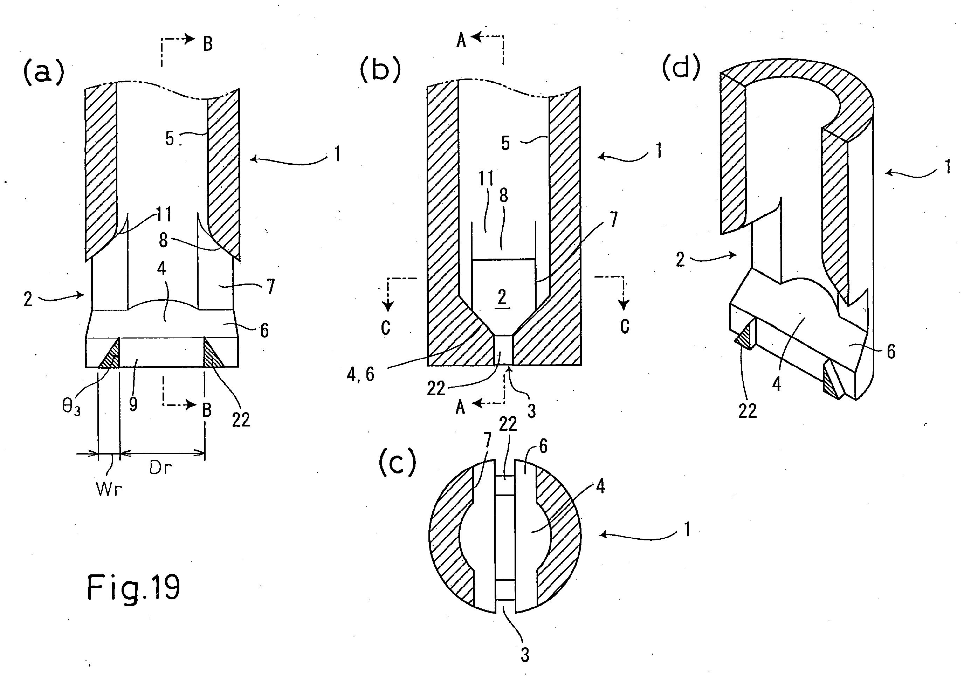

In an immersion nozzle having a slit at the cylinder bottom part, if the flow rate of the melt increases, the force of the flow of melt pushing the slit wider increases. For this reason, as shown in FIG. 19, it is preferable to provide the slit 3 with ribs 22 connecting the slit side walls 9. By providing the ribs 22, even if the force pushing the slit 3 wider increases, deformation or breakage of the immersion nozzle 1 can be prevented.

As the refractory used for the immersion nozzle, alumina graphite, alumina spinel, or another conventionally used refractory may be used.

However, depending on the ingredients of the molten steel, an alumina graphite immersion nozzle will sometimes be corroded and dissolve during casting, so it is preferable to make the cylinder side walls and cylinder bottom part of the immersion nozzle or part or all of the surfaces of the discharge ports and slit contiguous with the molten steel out of any of carbon-less spinel, low-carbon spinel, magnesia graphite, zirconia graphite, or silica-less alumina graphite (high melt loss resistance refractories).

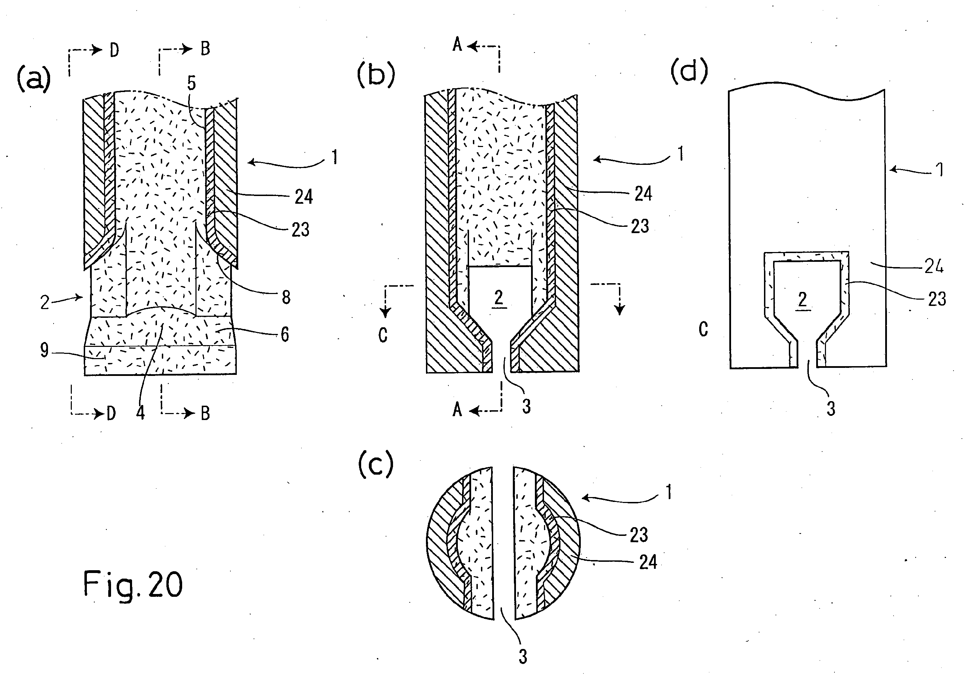

FIG. 20 shows an immersion nozzle where the cylinder side walls 5 and cylinder bottom part 6 and all of the surfaces of the discharge ports 2 and slit 3 contiguous with the molten steel are made of a high melt loss resistance refractory 23 and the other parts are made of an ordinary refractory 24.

In the present invention, there is extremely little sticking of nonmetallic inclusions to the immersion nozzle and no nozzle clogging, so the surface of the cast slab is resistant to formation of surface defects due to cluster-like inclusions.

Further, the cast slab obtained by the present invention is free of surface flaws even if made into thin-gauge steel sheet by hot rolling, cold rolling, or other ordinary methods since the penetration of bubbles and powder causing surface flaws is suppressed at the time of production.

Further, the present invention exhibits similar effects not only when applied to continuous casting of a slab of a usual thickness of 250 mm, but also in continuous casting of a thin slab with a casting mold thickness thinner than this, for example, 150 mm, so a cast slab of an extremely good quality can be obtained.

[Examples 1]

Below, examples and comparative examples (see Table 1) will be given to explain the present invention using immersion nozzles of various shapes (see FIGS. 1 to 6).

Table 1

| Item | Deoxidizing agent | Ar flow rate (Nl/min) | Immersion nozzle inner bore | Nozzle sticking | Max. difference of coefficient of heat transfer at casting mold short sides (J/(m²·s·K)) | uneven flow | Pinhole defects (/m²) | Surface flaws (/coil) |
|---|---|---|---|---|---|---|---|---|
| Ex. 1-1 | Ti and Ce-La alloy | 0 | Circular cross-section straight | None | 200 | None | None | 0.2 Inside range of edge trim, so no problem |
| Ex. 1-2 | Ti and Ce-La alloy | 2.8 | Circular cross-section with orifice | None | 150 | None | None | None |
| Ex. 1-3 | Ti and Ce-La-Nd alloy | 0.5 | Circular cross-section with orifice | None | 100 | None | None | None |
| Ex. 1-4 | Ti and Ce-La alloy | 0 | Circular cross-section with orifice | None | 50 | None | None | None |
| Ex. 1-5 | Ti and Ce-La-Nd alloy | 0.5 | Elliptical cross-section with orifice | None | 100 | None | None | None |
| Ex. 1-6 | Ti and Ce-La alloy | 0.5 | Circular cross-section with orifice | None | 100 | None | None | None |
| Ex. 1-7 | Ti, Al, and Ce-La-Nd alloy | 2.8 | Circular cross-section with orifice | None | 150 | None | None | None |
| Comp. Ex. 1-1 | Al | 7 | Circular cross-section straight | Yes | 300 | Yes | 15 | 10 |
| Comp. Ex. 1-2 | Al | 2 | Circular cross-section with orifice | Yes | 330 | Yes | None | 10 |
| Comp. Ex. 1-3 | Ti and Ce-La alloy | 7 | Circular cross-section straight | None | 300 | Yes | 15 | 3 |
| Comp. Ex. 1-4 | Ti and Ce-La alloy | 4.5 | Circular cross-section straight | None | 280 | Yes | 10 | 3 |

(continued)

| Item | Deoxidizing agent | Ar flow rate (Nl/min) | Immersion nozzle inner bore | Nozzle sticking | Max. difference of coefficient of heat transfer at casting mold short sides (J/ (m$^2$·s·K) | uneven flow | Pinhole defects (/m$^2$) | Surface flaws (/ coil) |
|---|---|---|---|---|---|---|---|---|
| Comp. Ex. 1-5 | Ti and Ce-La alloy | 3.5 | Circular cross-section with orifice | None | 260 | Yes | 5 | 1 |

Example 1-1

To 300 tons of molten steel in a ladle given a concentration of carbon of 0.002 mass% by refining in a converter and treatment by a vacuum degassing apparatus, Ti was added for deoxidation. The result was refluxed for 6 minutes, then Ce and La were added by a Ce-La alloy of a mass ratio Ce/La=1.3. The result was refluxed for 3 minutes to produce molten steel having a Ti concentration of 0.03 mass%, a total concentration of Ce and La of 0.01 mass%, and a Ce concentration/La concentration of 1.3.

This molten steel was cast by the continuous casting method without Ar (flow rate 0Nl/min) to obtain a cast slab of a thickness of 250 mm and a width of 1600 mm.

The cross-sectional shape of the immersion nozzle was a circle with an outside diameter of 150 and an inside diameter of 85 mm. The material of the inner bore was alumina graphite.

The length from the top end of the inner bore to the top ends of the discharge ports was 590 mm, and the inner bore was straight in shape.

During casting, there was no sticking of inclusions on the immersion nozzle and there was no problem with operability. Further, at the casting mold short side copper plates, a maximum 200J/(m$^2$·s·K) difference of coefficient of heat transfer occurred. This was under the uneven flow judgment criteria of 250J/(m$^2$·s·K), so it was judged that uneven flow did not occur.

The cast cast slab was cut to a length of 10000 mm to obtain 1 coil unit. The surface of this cast slab was examined by a CCD camera. The pinhole defects were evaluated by the number present per square meter cast slab surface area.

Next, this cast slab was hot rolled and cold rolled by ordinary methods to finally obtain a coil of cold rolled steel sheet of a thickness of 0.8 mm and a width of 1600 mm.

The steel sheet quality was visually inspected on the inspection line after cold rolling and was evaluated by the number of surface flaws occurring per coil.

As a result, the cast slab did not have any pinhole defects. Further, the surface of the cold rolled steel sheet had 0.2 surface flaw/coil. However, the surface flaws occurred at positions in the range of the edge trim, so did not become a problem in product quality.

Example 1-2

To 300 tons of molten steel in a ladle given a concentration of carbon of 0.002 mass% by refining in the converter and treatment by a vacuum degassing apparatus, Ti was added for deoxidation. The result was refluxed for 6 minutes, then Ce and La were added by a Ce-La alloy of a mass ratio Ce/La=1.3. The result was refluxed for 3 minutes to produce molten steel having a Ti concentration of 0.03 mass%, a total concentration of Ce and La of 0.01 mass%, and a Ce concentration/La concentration of 1.3.

This molten steel was cast by the continuous casting method with a flow rate of Ar gas blown in from a tundish upper nozzle of 2.8Nl/min to obtain a cast slab of a thickness of 250 mm and a width of 1600 mm.

The cross-sectional shape of the immersion nozzle was a circle with an outside diameter of 150 and an inside diameter of 85 mm. The material of the inner bore was alumina graphite.

The length from the top end of the inner bore to the top ends of the discharge ports was 590 mm, while the inner bore had a step difference of a height: R-r=5 mm, length: L=90 mm (orifice). The top end of this step difference was at a position 400 mm from the top end of the inner bore.

During casting, there was no sticking of inclusions on the immersion nozzle and there was no problem with operability. Further, at the casting mold short side copper plates, a maximum 150J/(m$^2$·s·K) difference of coefficient of heat transfer occurred. This was under the uneven flow judgment criteria of 250J/(m$^2$·s·K), so it was judged that uneven flow did not occur.

The cast cast slab was cut to a length of 10000 mm to obtain 1 coil unit. The surface of this cast slab was examined by a CCD camera. The pinhole defects were evaluated by the number present per square meter cast slab surface area.

Next, this cast slab was hot rolled and cold rolled by ordinary methods to finally obtain a coil of cold rolled steel sheet of a thickness of 0.8 mm and a width of 1600 mm.

The steel sheet quality was visually inspected on the inspection line after cold rolling and was evaluated by the number of surface flaws occurring per coil.

As a result, there were neither pinhole defects in the cast slab nor surface flaws on the steel sheet.

Example 1-3

To 300 tons of molten steel in a ladle given a concentration of carbon of 0.002 mass% by refining in the converter and treatment by a vacuum degassing apparatus, Ti was added for deoxidation. The result was refluxed for 6 minutes, then Ce, La, and Nd were added by a Ce-La-Nd alloy of a mass ratio Ce/La=1.3 and La/Nd=3.5. The result was refluxed for 3 minutes to produce molten steel having a Ti concentration of 0.03 mass%, a total concentration of Ce, La, and Nd of 0.01 mass%, and a Ld concentration/Nd concentration of 3.5.

This molten steel was cast by the continuous casting method with a flow rate of Ar gas blown in from a tundish upper nozzle of 0.5Nl/min to obtain a cast slab of a thickness of 250 mm and a width of 1600 mm.

The cross-sectional shape of the immersion nozzle was a circle with an outside diameter of 150 mm and an inside diameter of 85 mm. The material of the inner bore was alumina graphite.

The length from the top end of the inner bore to the top ends of the discharge ports was 590 mm, while the inner bore had a step difference of a height: R-r=5 mm, length: L=90 mm (orifice). The top end of this step difference was at a position 400 mm from the top end of the inner bore.

During casting, there was no sticking of inclusions on the immersion nozzle and there was no problem with operability. Further, at the casting mold short side copper plates, a maximum 100J/(m$^2$·s·K) difference of coefficient of heat transfer occurred. This was under the uneven flow judgment criteria of 250J/(m$^2$·s·K), so it was judged that uneven flow did not occur.

The cast cast slab was cut to a length of 10000 mm to obtain 1 coil unit. The surface of this cast slab was examined by a CCD camera. The pinhole defects were evaluated by the number present per square meter cast slab surface area.

Next, this cast slab was hot rolled and cold rolled by ordinary methods to finally obtain a coil of cold rolled steel sheet of a thickness of 0.8 mm and a width of 1600 mm.

The steel sheet quality was visually inspected on the inspection line after cold rolling and was evaluated by the number of surface flaws occurring per coil.

As a result, there were neither pinhole defects in the cast slab nor surface flaws on the steel sheet.

Example 1-4

To 300 tons of molten steel in a ladle given a concentration of carbon of 0.002 mass% by refining in the converter and treatment by a vacuum degassing apparatus, Ti was added for deoxidation. The result was refluxed for 6 minutes, then Ce and La were added by a Ce-La alloy of a mass ratio Ce/La=1.3. The result was refluxed for 3 minutes to produce molten steel having a Ti concentration of 0.03 mass%, a total concentration of Ce and La of 0.01 mass%, and a Ce concentration/La concentration of 1.3.

This molten steel was cast by the continuous casting method with no Ar (flow rate 0Nl/min) to obtain a cast slab of a thickness of 250 mm and a width of 1600 mm.

The cross-sectional shape of the immersion nozzle was a circle with an outside diameter of 150 mm and inside diameter of 85 mm. The material of the inner bore was alumina graphite.

The length from the top end of the inner bore to the top ends of the discharge ports was 590 mm, while the inner bore had a step difference of a height: R-r=5 mm, length: L=90 mm (orifice). The top end of this step difference was at a position 400 mm from the top end of the inner bore.

During casting, there was no sticking of inclusions on the immersion nozzle and there was no problem with operability. Further, at the casting mold short side copper plates, a maximum 50J/(m$^2$·s·K) difference of coefficient of heat transfer occurred. This was over the uneven flow judgment criteria of 250J/(m$^2$·s·K), so it was judged that uneven flow did not occur.

The cast cast slab was cut to a length of 10000 mm to obtain 1 coil unit. The surface of this cast slab was examined by a CCD camera. The pinhole defects were evaluated by the number present per square meter cast slab surface area.

Next, this cast slab was hot rolled and cold rolled by ordinary methods to finally obtain a coil of cold rolled steel sheet of a thickness of 0.8 mm and a width of 1600 mm.

The steel sheet quality was visually inspected on the inspection line after cold rolling and was evaluated by the number of surface flaws occurring per coil.

As a result, there were neither pinhole defects in the cast slab nor surface flaws on the steel sheet.

Example 1-5

To 300 tons of molten steel in a ladle given a concentration of carbon of 0.002 mass% by refining in the converter and treatment by a vacuum degassing apparatus, Ti was added for deoxidation. The result was refluxed for 6 minutes, then Ce, La, and Nd were added by a Ce-La-Nd alloy of a mass ratio Ce/La=1.3 and La/Nd=3.5. The result was refluxed for 3 minutes to produce molten steel having a Ti concentration of 0.03 mass%, a total concentration of Ce, La, and Nd of 0.01 mass%, a Ce concentration/La concentration of 1.3, and a Ld concentration/Nd concentration of 3.5.

This molten steel was cast by the continuous casting method with a flow rate of Ar gas blown in from a tundish upper nozzle of 0.5Nl/min to obtain a cast slab of a thickness of 250 mm and a width of 1600 mm.

The cross-sectional shape of the immersion nozzle was an outer shape of an ellipse with a long axis of 170 mm and a short axis of 120 mm and an inner shape of an ellipse with a long axis of 105 mm and a short axis of 75 mm. The material of the inner bore was alumina graphite.

The length from the top end of the inner bore to the top ends of the discharge ports was 590 mm, while the inner bore had a step difference of a height: A-a=5 mm, length: L=90 mm (orifice). The top end of this step difference was at a position 400 mm from the top end of the inner bore.

During casting, there was no sticking of inclusions on the immersion nozzle and there was no problem with operability. Further, at the casting mold short side copper plates, a maximum 100J/(m$^2$·s·K) difference of coefficient of heat transfer occurred. This was under the uneven flow judgment criteria of 250J/(m$^2$·s·K), so it was judged that uneven flow did not occur.

The cast cast slab was cut to a length of 10000 mm to obtain 1 coil unit. The surface of this cast slab was examined by a CCD camera. The pinhole defects were evaluated by the number present per square meter cast slab surface area.

Next, this cast slab was hot rolled and cold rolled by ordinary methods to finally obtain a coil of cold rolled steel sheet of a thickness of 0.8 mm and a width of 1600 mm.

The steel sheet quality was visually inspected on the inspection line after cold rolling and was evaluated by the number of surface flaws occurring per coil.

As a result, there were neither pinhole defects in the cast slab nor surface flaws on the steel sheet.

Example 1-6

To 300 tons of molten steel in a ladle given a concentration of carbon of 0.002 mass% by refining in the converter and treatment by a vacuum degassing apparatus, Ti was added for deoxidation. The result was refluxed for 6 minutes, then Ce and La were added by a Ce-La alloy of a mass ratio Ce/La=1.3. The result was refluxed for 3 minutes to produce molten steel having a Ti concentration of 0.03 mass%, a total concentration of Ce and La of 0.01 mass%, and a Ce concentration/La concentration of 1.3.

This molten steel was cast by the continuous casting method with a flow rate of Ar gas blown in from a tundish upper nozzle of 0.5Nl/min to obtain a cast slab of a thickness of 130 mm and a width of 1600 mm.

Here, as the thin slab continuous casting method, a casting mold of a thickness of 150 mm or less was used for the casting. The cast slab was held at a temperature of 1000 to 1200°C by a holding furnace placed at the downstream side of the machine end and hot rolled without cooling to near ordinary temperature.

The cross-sectional shape of the immersion nozzle was a circle with an outside diameter of 70 mm. The material of the inner bore was alumina graphite.

The length from the top end of the inner bore to the top ends of the discharge ports was 590 mm, while the inner bore had a step difference of a height: R-r=5 mm, length: L=90 mm (orifice). The top end of this step difference was at a position 400 mm from the top end of the inner bore.

During casting, there was no sticking of inclusions on the immersion nozzle and there was no problem with operability. Further, at the casting mold short side copper plates, a maximum 100J/(m$^2$·s·K) difference of coefficient of heat transfer occurred. This was under the uneven flow judgment criteria of 250J/(m$^2$·s·K), so it was judged that uneven flow did not occur.

The cast cast slab was cut to a length of 10000 mm to obtain 1 coil unit. The surface of this cast slab was examined by a CCD camera. The pinhole defects were evaluated by the number present per square meter cast slab surface area.

Next, this cast slab was hot rolled and cold rolled to finally obtain a coil of cold rolled steel sheet of a thickness of 0.8 mm and a width of 1600 mm.

The steel sheet quality was visually inspected on the inspection line after cold rolling and was evaluated by the number of surface flaws occurring per coil.

As a result, there were neither pinhole defects in the cast slab nor surface flaws on the steel sheet.

Example 1-7

To 300 tons of molten steel in a ladle given a concentration of carbon of 0.002 mass% and a concentration of Al of 0.005 mass% by refining in the converter and treatment by a vacuum degassing apparatus, Ti was added for deoxidation. The result was refluxed for 6 minutes, then Ce, La, and Nd were added by a Ce-La-Nd alloy of a mass ratio Ce/La=1.3 and La/Nd=3.5. The result was refluxed for 3 minutes to produce molten steel having a Ti concentration of 0.03 mass%, a total concentration of Ce, La, and Nd of 0.01 mass%, a Ce concentration/La concentration of 1.3, and a Ld concentration/Nd concentration of 3.5.

This molten steel was cast by the continuous casting method into a cast slab of a thickness of 250 mm and a width of 1600 mm with a flow rate of Ar gas blown in from a tundish upper nozzle of 2.8Nl/min.

The cross-sectional shape of the immersion nozzle was a circle with an outside diameter of 150 and an inside diameter of 85 mm. The material of the inner bore was alumina graphite.

The length from the top end of the inner bore to the top ends of the discharge ports was 590 mm, while the inner bore had a step difference of a height: R-r=5 mm, length: L=90 mm (orifice). The top end of this step difference was at a position 400 mm from the top end of the inner bore.

During casting, there was no sticking of inclusions on the immersion nozzle and there was no problem with operability. Further, at the casting mold short side copper plates, a maximum $150J/(m^2 \cdot s \cdot K)$ difference of coefficient of heat transfer occurred. This was under the uneven flow judgment criteria of $250J/(m^2 \cdot s \cdot K)$, so it was judged that uneven flow did not occur.

The cast cast slab was cut to a length of 10000 mm to obtain 1 coil unit. The surface of this cast slab was examined by a CCD camera. The pinhole defects were evaluated by the number present per square meter cast slab surface area.

Next, this cast slab was hot rolled and cold rolled by ordinary methods to finally obtain a coil of cold rolled steel sheet of a thickness of 0.8 mm and a width of 1600 mm.

The steel sheet quality was visually inspected on the inspection line after cold rolling and was evaluated by the number of surface flaws occurring per coil.

As a result, there were neither pinhole defects in the cast slab nor surface flaws on the steel sheet.

Comparative Example 1-1

To 300 tons of molten steel in a ladle given a concentration of carbon of 0.002 mass% by refining in the converter and treatment by a vacuum degassing apparatus, Al was added for deoxidation. This was refluxed for 5 minutes to produce molten steel with an Al concentration of 0.04 mass%.

This molten steel was cast by the continuous casting method with a flow rate of Ar gas blown in from a tundish upper nozzle of 7Nl/min to obtain a cast slab of a thickness of 250 mm and a width of 1600 mm.

The cross-sectional shape of the immersion nozzle was a circle with an outside diameter of 150 and an inside diameter of 85 mm. The material of the inner bore was alumina graphite. The length from the top end of the inner bore to the top ends of the discharge ports was 590 mm, and the inner bore was straight in shape.

During casting, starting from when a cast mass of 150 tons is passed, the opening degree of the sliding nozzle of the tundish gradually became larger, so it was judged that inclusions had stuck to the immersion nozzle. The speed was reduced to secure the supply of molten steel to the casting mold and the casting was completed.

At the casting mold short side copper plates, a maximum $300J/(m^2 \cdot s \cdot K)$ difference of coefficient of heat transfer occurred. This was over the uneven flow judgment criteria of $250J/(m^2 \cdot s \cdot K)$, so it was judged that uneven flow occurred.

The cast cast slab was cut to a length of 10000 mm to obtain 1 coil unit. The surface of this cast slab was examined by a CCD camera. The pinhole defects were evaluated by the number present per square meter cast slab surface area.

Next, this cast slab was hot rolled and cold rolled by ordinary methods to finally obtain a coil of cold rolled steel sheet of a thickness of 0.8 mm and a width of 1600 mm.

The steel sheet quality was visually inspected on the inspection line after cold rolling and was evaluated by the number of surface flaws occurring per coil.

As a result, the cast slab had 15 pinhole defects/$m^2$, while the steel sheet had 10 surface flaws/coil.

Comparative Example 1-2

To 300 tons of molten steel in a ladle given a concentration of carbon of 0.002 mass% by refining in the converter and treatment by a vacuum degassing apparatus, Al was added for deoxidation. This was refluxed for 5 minutes to produce molten steel with an Al concentration of 0.04 mass%.

This molten steel was cast by the continuous casting method with a flow rate of Ar gas blown in from a tundish upper nozzle of 2Nl/min to obtain a cast slab of a thickness of 250 mm and a width of 1600 mm.

The cross-sectional shape of the immersion nozzle was a circle with an outside diameter of 150 and an inside diameter of 85 mm. The material of the inner bore was alumina graphite. The length from the top end of the inner bore to the top ends of the discharge ports was 590 mm, while the inner bore had a step difference of a height: R-r=5 mm and a length: L=90 mm (orifice). The top end of this step difference was at a position 400 mm from the top end of the inner bore.

Soon after the start of casting, the opening degree of the sliding nozzle of the tundish gradually began to rise. At the point of time of a casting mass of 150 tons, even if making the opening degree full open, the supply of molten steel into the casting mold became insufficient. At this point of time, it was judged that the immersion nozzle was clogged. The casting was suspended in a state with a total of 130 tons of molten steel left in the ladle and tundish (cast mass 170 tons).

During casting, at the casting mold short side copper plates, a maximum 330J/(m$^2$·s·K) difference of coefficient of heat transfer occurred. This was over the uneven flow judgment criteria of 250J/ (m$^2$·s·K), so it was judged that uneven flow occurred.

Along with the progression of the clogged state of the immersion nozzle, it is believed that the effect of the step difference (orifice) was lost, an uneven flow rate distribution occurred, and an uneven flow resulted.

The cast cast slab was cut to a length of 10000 mm to obtain 1 coil unit. The surface of this cast slab was examined by a CCD camera. The pinhole defects were evaluated by the number present per square meter cast slab surface area.

Next, this cast slab was hot rolled and cold rolled by ordinary methods to finally obtain a coil of cold rolled steel sheet of a thickness of 0.8 mm and a width of 1600 mm.

The steel sheet quality was visually inspected on the inspection line after cold rolling and was evaluated by the number of surface flaws occurring per coil.

As a result, the cast slab had no pinhole defects, but the steel sheet had 10 surface flaws/coil.

Comparative Example 1-3

To 300 tons of molten steel in a ladle given a concentration of carbon of 0.002 mass% by refining in the converter and treatment by a vacuum degassing apparatus, Ti was added for deoxidation. The result was refluxed for 6 minutes, then Ce and La were added by a Ce-La alloy of a mass ratio Ce/La=1.3. The result was refluxed for 3 minutes to produce molten steel having a Ti concentration of 0.03 mass%, a total concentration of Ce and La of 0.01 mass%, and a Ce concentration/La concentration of 1.3.

This molten steel was cast by the continuous casting method with a flow rate of Ar gas blown in from a tundish upper nozzle of 7Nl/min to obtain a cast slab of a thickness of 250 mm and a width of 1600 mm.

The cross-sectional shape of the immersion nozzle was a circle with an outside diameter of 150 and an inside diameter of 85 mm. The material of the inner bore was aluminagraphite. The length from the top end of the inner bore to the top ends of the discharge ports was 590 mm, and the inner bore was straight in shape.

During casting, there was no sticking of inclusions on the immersion nozzle and there was no problem with operability. However, at the casting mold short side copper plates, a maximum 300J/(m$^2$·s·K) difference of coefficient of heat transfer occurred. This was over the uneven flow judgment criteria of 250J/(m$^2$·s·K), so it was judged that uneven flow occurred.

The cast cast slab was cut to a length of 10000 mm to obtain 1 coil unit. The surface of this cast slab was examined by a CCD camera. The pinhole defects were evaluated by the number present per square meter cast slab surface area.

Next, this cast slab was hot rolled and cold rolled by ordinary methods to finally obtain a coil of cold rolled steel sheet of a thickness of 0.8 mm and a width of 1600 mm.

The steel sheet quality was visually inspected on the inspection line after cold rolling and was evaluated by the number of surface flaws occurring per coil.

As a result, the cast slab had 15 pinhole defects/m$^2$, while the steel sheet had 3 surface flaws/coil.

Comparative Example 1-4

To 300 tons of molten steel in a ladle given a concentration of carbon of 0.002 mass% by refining in the converter and treatment by a vacuum degassing apparatus, Ti was added for deoxidation. The result was refluxed for 6 minutes, then Ce and La were added by a Ce-La alloy of a mass ratio Ce/La=1.2. The result was refluxed for 3 minutes to produce molten steel having a Ti concentration of 0.03 mass%, a total concentration of Ce and La of 0.01 mass%, and a Ce concentration/La concentration of 1.2.

This molten steel was cast by the continuous casting method with a flow rate of Ar gas blown in from a tundish upper nozzle of 4.5Nl/min to obtain a cast slab of a thickness of 250 mm and a width of 1600 mm.

The cross-sectional shape of the immersion nozzle was a circle with an outside diameter of 150 and an inside diameter of 85 mm. The material of the inner bore was alumina graphite. The length from the top end of the inner bore to the top ends of the discharge ports was 590 mm, and the inner bore was straight in shape.

During casting, there was no sticking of inclusions on the immersion nozzle and there was no problem with operability. However, at the casting mold short side copper plates, a maximum $280J/(m^2 \cdot s \cdot K)$ difference of coefficient of heat transfer occurred. This was over the uneven flow judgment criteria of $250J/(m^2 \cdot s \cdot K)$, so it was judged that uneven flow occurred.

The cast cast slab was cut to a length of 10000 mm to obtain 1 coil unit. The surface of this cast slab was examined by a CCD camera. The pinhole defects were evaluated by the number present per square meter cast slab surface area.

Next, this cast slab was hot rolled and cold rolled by ordinary methods to finally obtain a coil of cold rolled steel sheet of a thickness of 0.8 mm and a width of 1600 mm.

The steel sheet quality was visually inspected on the inspection line after cold rolling and was evaluated by the number of surface flaws occurring per coil.

As a result, the cast slab had 10 pinhole defects/m$^2$, while the steel sheet had 3 surface flaws/coil.

Comparative Example 1-5

To 300 tons of molten steel in a ladle given a concentration of carbon of 0.002 mass% by refining in the converter and treatment by a vacuum degassing apparatus, Ti was added for deoxidation. The result was refluxed for 6 minutes, then Ce and La were added by a Ce-La alloy of a mass ratio Ce/La=1.2. The result was refluxed for 3 minutes to produce molten steel having a Ti concentration of 0.03 mass%, a total concentration of Ce and La of 0.01 mass%, and a Ce concentration/La concentration of 1.2.

This molten steel was cast by the continuous casting method with a flow rate of Ar gas blown in from a tundish upper nozzle of 3.5Nl/min to obtain a cast slab of a thickness of 250 mm and a width of 1600 mm.

The cross-sectional shape of the immersion nozzle was a circle with an outside diameter of 150 and an inside diameter of 85 mm. The material of the inner bore was alumina graphite. The length from the top end of the inner bore to the top ends of the discharge ports was 590 mm, while the inner bore had a step difference of a height: R-r=5 mm, length: L=90 mm (orifice). The top end of this step difference was at a position 400 mm from the top end of the inner bore.

During casting, there was no sticking of inclusions on the immersion nozzle and there was no problem with operability. However, at the casting mold short side copper plates, a maximum $260J/(m^2 \cdot s \cdot K)$ difference of coefficient of heat transfer occurred. This was over the uneven flow judgment criteria of $250J/(m^2 \cdot s \cdot K)$, so it was judged that uneven flow occurred.

The cast cast slab was cut to a length of 10000 mm to obtain 1 coil unit. The surface of this cast slab was examined by a CCD camera. The pinhole defects were evaluated by the number present per square meter cast slab surface area.

Next, this cast slab was hot rolled and cold rolled by ordinary methods to finally obtain a coil of cold rolled steel sheet of a thickness of 0.8 mm and a width of 1600 mm.

The steel sheet quality was visually inspected on the inspection line after cold rolling and was evaluated by the number of surface flaws occurring per coil.

As a result, the cast slab had 5 pinhole defects/m$^2$, while the steel sheet had 1 surface flaw/coil.

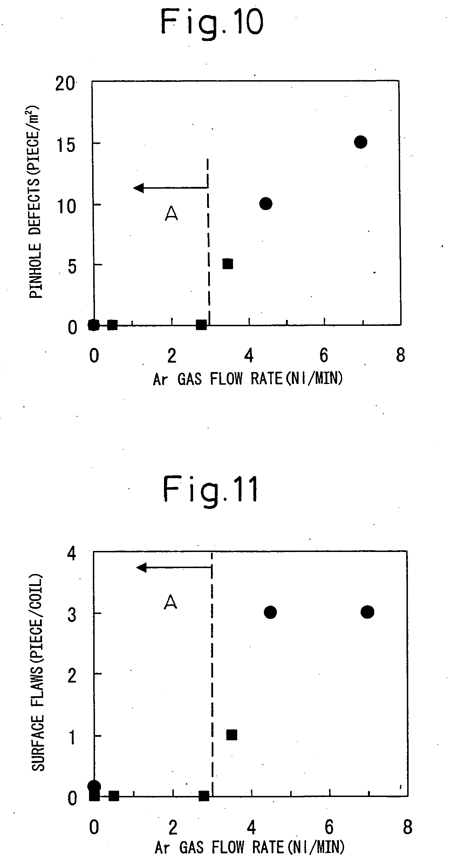

Here, FIG. 10 shows the relation between the Ar gas flow rate and cast slab pinhole defects based on Examples 1-1 to 1-6 and Comparative Examples 1-3 to 1-5 (deoxidization by Ti-rare earth metals). In the figure, the black dots show the case of use of an immersion nozzle with an inner bore of a straight shape, while the black squares show the case of an immersion nozzle having an orifice in its inner bore.

Further, FIG. 11 shows the relation between the Ar gas flow rate and occurrence of steel sheet surface flaws based on Examples 1-2 to 1-6 and Comparative Examples 1-3 to 1-5 (deoxidization by Ti-rare earth metals). In the figure, the black dots show the case of use of an immersion nozzle with an inner bore of a straight shape, while the black squares show the case of an immersion nozzle having an orifice in its inner bore.

In the present invention, it is learned that if using an immersion nozzle having an orifice in its inner bore or an immersion nozzle with an inner bore of a straight shape and casting with an Ar gas flow rate of 3Nl/min or less (region A in the figure), a good quality cast slab free of both cast slab pinhole defects and steel sheet surface flaws can be obtained.

Examples 2

Below, examples and comparative example (see Table 2) will be given to explain the present invention using an immersion nozzle having a slit at its bottom (see FIG. 12 to FIG. 20).

Table 2

| Item | Deoxidizing agent | Ar flow rate (Nl/min) | Immersion nozzle inner bore | Nozzle sticking | Max. difference of coefficient of heat transfer at casting mold short sides (J/ (m²·s·K)) | Drift | Pinhole defect (/m²) | Surface flaws (/ coil) |
|------|-------------------|------------------------|------------------------------|------------------|------------------------------------------------------------------------------------------|-------|----------------------|-------------------------|
| Ex. 2-1 | Ti and Ce-La alloy | 2.8 | Circular cross-section, straight slit width 15 mm $\theta_1$, $\theta_2$: 45° | None | 100 | None | None | None |
| Ex. 2-2 | Ti and Ce-La alloy | 0.5 | Circular cross-section, with orifice slit width 15 mm $\theta_1$, $\theta_2$: 45° | None | 80 | None | None | None |
| Ex. 2-3 | Ti and Ce-La alloy | 0 | Circular cross-section, with orifice s lit width mm 15 $\theta_1$, $\theta_2$: 45° | None | 90 | None | None | 0.2 Inside range of edge trim, so no problem |
| Ex. 2-4 | Ti and Ce-La alloy | 2.8 | Circular cross-section, with orifice slit width 15 mm $\theta_1$, $\theta_2$: 45° | None | 110 | None | None | None |
| Ex. 2-5 | Ti, Al and Ce-La alloy | 2.8 | Elliptical cross-section, straight slit width 15 mm $\theta_1$, $\theta_2$: 45° | None | 120 | None | None | None |
| Ex. 2-6 | Ti, Al and Ce-La alloy | 0 | Circular cross-section, with orifice slit width 15 mm $\theta_1$, $\theta_2$: 45° | None | 50 | None | None | 0.2 Inside range of edge trim, so no problem |

(continued)

| Item | Deoxidizing agent | Ar flow rate (Nl/min) | Immersion nozzle inner bore | Nozzle sticking | Max. difference of coefficient of heat transfer at casting mold short sides (J/(m²·s·K)) | Drift | Pinhole defect (/m²) | Surface flaws (/ coil) |
|---|---|---|---|---|---|---|---|---|
| Comp. Ex. 2-1 | Al | 2.8 | Circular cross-section, straight slit width 15 mm $\theta_1$, $\theta_2$: 45° | None | 280 | Yes | 10 | 3 |
| Comp. Ex. 2-2 | Al | 2.8 | Circular cross-section, straight slit width 15 mm $\theta_1$, $\theta_2$: 45° | None | 260 | Yes | 5 | 1 |
| Comp. Ex. 2-3 | Al | 2.8 | Circular cross-section, straight slit width 15 mm $\theta_1$, $\theta_2$: 45° | None | 300 | Yes | 15 | 3 |

Example 2-1

To 300 tons of molten steel in a ladle given a concentration of carbon of 0.002 mass% by refining in the converter and treatment by a vacuum degassing apparatus, Ti was added for deoxidation. The result was refluxed for 6 minutes, then Ce and La were added by a Ce-La alloy of a mass ratio Ce/La=1.3. The result was refluxed for 3 minutes to produce molten steel having a Ti concentration of 0.03 mass%, a total concentration of Ce and La of 0.01 mass%, and a Ce concentration/La concentration of 1.3.

This molten steel was cast by the continuous casting method with a flow rate of Ar gas blown in from a tundish upper nozzle of 2.8Nl/min to obtain a cast slab of a thickness of 250 mm and a width of 1600 mm.

The immersion nozzle used was the immersion nozzle shown in FIG. 13. The cross-sectional shape of the immersion nozzle was a circle with an outside diameter of 150 and an inside diameter of 85 mm. The cross-sectional area of the opening of the discharge ports was 2829 mm², the slit width was 15 mm, and the angles $\theta_1$ and $\theta_2$ were both 45°. The material of the inner bore was alumina graphite.

The length from the top end of the inner bore to the top ends of the discharge ports was 590 mm, and the inner bore was straight in shape.

During casting, there was no sticking of inclusions on the immersion nozzle and there was no problem with operability. Further, at the casting mold short side copper plates, a maximum 100J/(m²·s·K) difference of coefficient of heat transfer occurred. This was under the uneven flow judgment criteria of 280J/(m²·s·K), so it was judged that uneven flow did not occur.

The cast cast slab was cut to a length of 10000 mm to obtain 1 coil unit. The surface of this cast slab was examined by a CCD camera. The pinhole defects were evaluated by the number present per square meter cast slab surface area.

Next, this cast slab was hot rolled and cold rolled by ordinary methods to finally obtain a coil of cold rolled steel sheet of a thickness of 0.8 mm and a width of 1600 mm.

The steel sheet quality was visually inspected on the inspection line after cold rolling and was evaluated by the number of surface flaws occurring per coil.

As a result, there were neither pinhole defects in the cast slab nor surface flaws on the steel sheet.

Example 2-2

To 300 tons of molten steel in a ladle given a concentration of carbon of 0.002 mass% by refining in the converter and treatment by a vacuum degassing apparatus, Ti was added for deoxidation. The result was refluxed for 6 minutes, then Ce and La were added by a Ce-La alloy of a mass ratio Ce/La=1.3. The result was refluxed for 3 minutes to produce molten steel having a Ti concentration of 0.03 mass%, a total concentration of Ce and La of 0.01 mass%, and a Ce concentration/La concentration of 1.3.

This molten steel was cast by the continuous casting method with a flow rate of Ar gas blown in from a tundish upper nozzle of 0.5Nl/min to obtain a cast slab of a thickness of 250 mm and a width of 1600 mm.

The immersion nozzle used was the immersion nozzle shown in FIG. 17 and FIG. 18. The cross-sectional shape of the immersion nozzle was a circle with an outside diameter of 150 and an inside diameter of 85 mm, the cross-sectional area of the opening of the discharge ports was 2829 $mm^2$, the slit width was 15 mm, and the angles $\theta_1$ and $\theta_2$ were both 45°. The radius of curvature Rz of the curved surface 11 was 60 mm. The material of the inner bore was alumina graphite.

The length from the top end of the inner bore to the top ends of the discharge ports was 590 mm, while the inner bore had a step difference of a height: R-r=5 mm, length: L=90 mm (orifice). The top end of this step difference was at a position 400 mm from the top end of the inner bore.

During casting, there was no sticking of inclusions on the immersion nozzle and there was no problem with operability. Further, at the casting mold short side copper plates, a maximum 80J/($m^2 \cdot s \cdot K$) difference of coefficient of heat transfer occurred. This was under the uneven flow judgment criteria of 250J/($m^2 \cdot s \cdot K$), so it was judged that uneven flow did not occur.

The cast cast slab was cut to a length of 10000 mm to obtain 1 coil unit. The surface of this cast slab was examined by a CCD camera. The pinhole defects were evaluated by the number present per square meter cast slab surface area.

Next, this cast slab was hot rolled and cold rolled by ordinary methods to finally obtain a coil of cold rolled steel sheet of a thickness of 0.8 mm and a width of 1600 mm.

The steel sheet quality was visually inspected on the inspection line after cold rolling and was evaluated by the number of surface flaws occurring per coil.

As a result, there were neither pinhole defects in the cast slab nor surface flaws on the steel sheet.

Example 2-3

To 300 tons of molten steel in a ladle given a concentration of carbon of 0.002 mass% by refining in the converter and treatment by a vacuum degassing apparatus, Ti was added for deoxidation. The result was refluxed for 6 minutes, then Ce and La were added by a Ce-La alloy of a mass ratio Ce/La=1.3. The result was refluxed for 3 minutes to produce molten steel having a Ti concentration of 0.03 mass%, a total concentration of Ce and La of 0.01 mass%, and a Ce concentration/La concentration of 1.3.

This molten steel was cast by the continuous casting method with a flow rate of Ar gas blown in from a tundish upper nozzle of 0Nl/min to obtain a cast slab of a thickness of 250 mm and a width of 1600 mm.

The immersion nozzle used was the immersion nozzle shown in FIG. 17 and FIG. 18. The cross-sectional shape of the immersion nozzle was a circle with an outside diameter of 150 and an inside diameter of 85 mm. The cross-sectional area of the opening of the discharge port was 2829 $mm^2$, the slit width was 15 mm, and the angles $\theta_1$ and $\theta_2$ were both 45°. The discharge angle $\phi$ was 45°, while the radius of curvature Rz of the curved surface 11 was 60 mm. The material of the inner bore was alumina graphite.

The length from the top end of the inner bore to the top ends of the discharge ports was 590 mm, while the inner bore had a step difference of a height: R-r=5 mm, length: L=90 mm (orifice). The top end of this step difference was at a position 400 mm from the top end of the inner bore.

During casting, there was no sticking of inclusions on the immersion nozzle and there was no problem with operability. Further, at the casting mold short side copper plates, a maximum 90J/($m^2 \cdot s \cdot K$) difference of coefficient of heat transfer occurred. This was under the uneven flow judgment criteria of 250J/($m^2 \cdot s \cdot K$), so it was judged that uneven flow did not occur.

The cast cast slab was cut to a length of 10000 mm to obtain 1 coil unit. The surface of this cast slab was examined by a CCD camera. The pinhole defects were evaluated by the number present per square meter cast slab surface area.

Next, this cast slab was hot rolled and cold rolled by ordinary methods to finally obtain a coil of cold rolled steel sheet of a thickness of 0.8 mm and a width of 1600 mm.

The steel sheet quality was visually inspected on the inspection line after cold rolling and was evaluated by the number of surface flaws occurring per coil.

As a result, the cast slab did not have any pinhole defects. Further, the surface of the cold rolled steel sheet had 0.2 surface flaw/coil. However, the surface flaws occurred at positions in the range of the edge trim, so did not become a problem in product quality.

Example 2-4

To 300 tons of molten steel in a ladle given a concentration of carbon of 0.002 mass% by refining in the converter and treatment by a vacuum degassing apparatus, Ti was added for deoxidation. The result was refluxed for 6 minutes, then Ce and La were added by a Ce-La alloy of a mass ratio Ce/La=1.3. The result was refluxed for 3 minutes to produce molten steel having a Ti concentration of 0.03 mass%, a total concentration of Ce and La of 0.01 mass%, and a Ce concentration/La concentration of 1.3.

This molten steel was cast by the continuous casting method with a flow rate of Ar gas blown in from a tundish upper nozzle of 2.8Nl/min to obtain a cast slab of a thickness of 250 mm and a width of 1600 mm.

The immersion nozzle used was the immersion nozzle shown in FIG. 19. The cross-sectional shape of the immersion nozzle was a circle with an outside diameter of 150 and an inside diameter of 85 mm. The cross-sectional area of the opening of the discharge ports was 2829 mm$^2$, the slit width was 15 mm, and the angles $\theta_1$ and $\theta_2$ were both 45°. The discharge angle $\phi$ was 45°, while the radius of curvature Rz of the curved surface 11 was 60 mm.

The vertex angle $\theta_3$ of the rib was 30°, the width Wr of the bottom surface of the rib was 15 mm, and the distance Dr between the side walls of the rib was 85 mm. The material of the inner bore was alumina graphite.

The length from the top end of the inner bore to the top ends of the discharge ports was 590 mm, while the inner bore had a step difference of a height: R-r=5 mm, length: L=90 mm (orifice). The top end of this step difference is at a position 400 mm from the top end of the inner bore.

During casting, there was no sticking of inclusions on the immersion nozzle and there was no problem with operability. Further, at the casting mold short side copper plates, a maximum 110J/(m$^2$·s·K) difference of coefficient of heat transfer occurred. This was under the uneven flow judgment criteria of 250J/(m$^2$·s·K), so it was judged that uneven flow.did not occur.

The cast cast slab was cut to a length of 10000 mm to obtain 1 coil unit. The surface of this cast slab was examined by a CCD camera.. The pinhole defects were evaluated by the number,present per square meter cast slab surface area.

Next, this cast slab was hot rolled and cold rolled by ordinary methods to finally obtain a coil of cold rolled steel sheet of a thickness of 0.8 mm and a width of 1600 mm.

The steel sheet quality was visually inspected on the inspection line after cold rolling and was evaluated by the number of surface flaws occurring per coil.

As a result, there were neither pinhole defects in the cast slab nor surface flaws on the steel sheet.

Example 2-5

To 300 tons of molten steel in a ladle given a concentration of carbon of 0.002 mass% and a concentration of Al of 0.005 mass% by refining in the converter and treatment by a vacuum degassing apparatus, Ti was added for deoxidation. The result was refluxed for 6 minutes, then Ce and La were added by a Ce-La alloy of a mass ratio Ce/La=1.3. The result was refluxed for 3 minutes to produce molten steel having a Ti concentration of 0.03 mass%, a total concentration of Ce and La of 0.01 mass%, and a Ce concentration/La concentration of 1.3.

This molten steel was cast by the continuous casting method into a cast slab of a thickness of 250 mm and a width of 1600 mm with a flow rate of Ar gas blown in from a tundish upper nozzle of 2.8Nl/min.

The immersion nozzle used was the immersion nozzle shown in FIG. 13. The cross-sectional shape of the immersion nozzle was a circle with an outside diameter of 150 and an inside diameter of 85 mm. The cross-sectional area of the opening of the discharge ports was 2829 mm$^2$, the slit width was 15 mm, and the angles $\theta_1$ and $\theta_2$ were both 45°. The material of the inner bore was alumina graphite.

The length from the top end of the inner bore to the top ends of the discharge ports was 590 mm, and the inner bore was straight in shape.

During casting, there was no sticking of inclusions on the immersion nozzle and there was no problem with operability. Further, at the casting mold short side copper plates, a maximum 120J/(m$^2$·s·K) difference of coefficient of heat transfer occurred. This was under the uneven flow judgment criteria of 250J/(m$^2$·s·K), so it was judged that uneven flow did not occur.

The cast cast slab was cut to a length of 10000 mm to obtain 1 coil unit. The surface of this cast slab was examined by a CCD camera. The pinhole defects were evaluated by the number present per square meter cast slab surface area.

Next, this cast slab was hot rolled and cold rolled by ordinary methods to finally obtain a coil of cold rolled steel sheet of a thickness of 0.8 mm and a width of 1600 mm.

The steel sheet quality was visually inspected on the inspection line after cold rolling and was evaluated by the number of surface flaws occurring per coil.

As a result, there were neither pinhole defects in the cast slab nor surface flaws on the steel sheet.

Example 2-6

To 300 tons of molten steel in a ladle given a concentration of carbon of 0.002 mass% and a concentration of Al of 0.005 mass% by refining in the converter and treatment by a vacuum degassing apparatus, Ti was added for deoxidation. The result was refluxed for 6 minutes, then Ce and La were added by a Ce-La alloy of a mass ratio Ce/La=1.3. The result was refluxed for 3 minutes to produce molten steel having a Ti concentration of 0.03 mass%, a total concentration of Ce and La of 0.01 mass%, and a Ce concentration/La concentration of 1.3.

This molten steel was cast by the continuous casting method with a flow rate of Ar gas blown in from a tundish upper nozzle of 0Nl/min to obtain a cast slab of a thickness of 250 mm and a width of 1600 mm.

The immersion nozzle used was the immersion nozzle shown in FIG. 17 and FIG. 18. The cross-sectional shape of the immersion nozzle was a circle with an outside diameter of 150 and an inside diameter of 85 mm. The cross-sectional area of the opening of the discharge ports was 2829 mm$^2$, the slit width was 15 mm, and the angles $\theta_1$ and $\theta_2$ were both 45°. The discharge angle $\phi$ was 20°, while the radius of curvature Rz of the curved surface 11 was 51 mm. The material of the inner bore was alumina graphite.

The length from the top end of the inner bore to the top ends of the discharge ports was 590 mm, while the inner bore had a step difference of a height: R-r=5 mm, length: L=90 mm (orifice). The top end of this step difference was at a position 400 mm from the top end of the inner bore.

During casting, there was no sticking of inclusions on the immersion nozzle and there was no problem with operability. Further, at the casting mold short side copper plates, a maximum 50J/(m$^2$·s·K) difference of coefficient of heat transfer occurred. This was under the uneven flow judgment criteria of 250J/(m$^2$·s·K), so it was judged that uneven flow did not occur.

The cast cast slab was cut to a length of 10000 mm to obtain 1 coil unit. The surface of this cast slab was examined by a CCD camera. The pinhole defects were evaluated by the number present per square meter cast slab surface area.

Next, this cast slab was hot rolled and cold rolled by ordinary methods to finally obtain a coil of cold rolled steel sheet of a thickness of 0.8 mm and a width of 1600 mm.

The steel sheet quality was visually inspected on the inspection line after cold rolling and was evaluated by the number of surface flaws occurring per coil.

As a result, the cast slab did not have any pinhole defects. Further, the surface of the cold rolled steel sheet had 0.2 surface flaw/coil. However, the surface flaws occurred at positions in the range of the edge trim, so did not become a problem in product quality.

Comparative Example 2-1

To 300 tons of molten steel in a ladle given a concentration of carbon of 0.002 mass% by refining in the converter and treatment by a vacuum degassing apparatus, Al was added for deoxidation. The result was refluxed for 5 minutes to produce molten steel with an Al concentration of 0.04 mass%.

This molten steel was cast by the continuous casting method with a flow rate of Ar gas blown in from a tundish upper nozzle of 2.8Nl/min to obtain a cast slab of a thickness of 250 mm and a width of 1600 mm.

The immersion nozzle used was the immersion nozzle shown in FIG. 13. The cross-sectional shape of the immersion nozzle was a circle with an outside diameter of 150 and an inside diameter of 85 mm. The cross-sectional area of the opening of the discharge ports was 2829 mm$^2$, the slit width was 15 mm, and the angles $\theta_1$ and $\theta_2$ were both 15°. The material of the inner bore was alumina graphite.

The length from the top end of the inner bore to the top ends of the discharge ports was 590 mm, and the inner bore was straight in shape.

During casting, there was no sticking of inclusions on the immersion nozzle and there was no problem with operability. However, at the casting mold short side copper plates, a maximum 280J/(m$^2$·s·K) difference of coefficient of heat transfer occurred. This was over the uneven flow judgment criteria of 250J/(m$^2$·s·K), so it was judged that uneven flow occurred.

The cast cast slab was cut to a length of 10000 mm to obtain 1 coil unit. The surface of this cast slab was examined by a CCD camera. The pinhole defects were evaluated by the number present per square meter cast slab surface area.

Next, this cast slab was hot rolled and cold rolled by ordinary methods to finally obtain a coil of cold rolled steel sheet of a thickness of 0.8 mm and a width of 1600 mm.

The steel sheet quality was visually inspected on the inspection line after cold rolling and was evaluated by the number of surface flaws occurring per coil.

As a result, the cast slab had 10 pinhole defects/m$^2$, while the steel sheet had 3 surface flaws/coil.

Comparative Example 2-2

To 300 tons of molten steel in a ladle given a concentration of carbon of 0.002 mass% by refining in the converter and treatment by a vacuum degassing apparatus, Al was added for deoxidation. The result was refluxed for 5 minutes to produce molten steel with an Al concentration of 0.04 mass%.

This molten steel was cast by the continuous casting method with a flow rate of Ar gas blown in from a tundish upper nozzle of 2.8Nl/min to obtain a cast slab of a thickness of 250 mm and a width of 1600 mm.

The immersion nozzle used was the immersion nozzle shown in FIG. 13. The cross-sectional shape of the immersion nozzle was a circle with an outside diameter of 150 and an inside diameter of 85 mm. The cross-sectional area of the opening of the discharge ports was 2829 mm$^2$, the slit width was 5 mm, and the angles $\theta_1$ and $\theta_2$ were both 45°. The material of the inner bore was alumina graphite.

The length from the top end of the inner bore to the top ends of the discharge ports was 590 mm, and the inner bore was straight in shape.

During casting, there was no sticking of inclusions on the immersion nozzle and there was no problem with operability. However, at the casting mold short side copper plates, a maximum 260J/(m$^2$·s·K) difference of coefficient of heat transfer occurred. This was over the uneven flow judgment criteria of 250J/(m$^2$·s·K), so it was judged that uneven flow occurred.

The cast cast slab was cut to a length of 10000 mm to obtain 1 coil unit. The surface of this cast slab was examined by a CCD camera. The pinhole defects were evaluated by the number present per square meter cast slab surface area.

Next, this cast slab was hot rolled and cold rolled by ordinary methods to finally obtain a coil of cold rolled steel sheet of a thickness of 0.8 mm and a width of 1600 mm.

The steel sheet quality was visually inspected on the inspection line after cold rolling and was evaluated by the number of surface flaws occurring per coil.

As a result, the cast slab had 5 pinhole defects/m$^2$, while the steel sheet had 1 surface flaw/coil.

Comparative Example 2-3

To 300 tons of molten steel in a ladle given a concentration of carbon of 0.002 mass% by refining in the converter and treatment by a vacuum degassing apparatus, Al was added for deoxidation. The result was refluxed for 5 minutes to produce molten steel with an Al concentration of 0.04 mass%.

This molten steel was cast by the continuous casting method with a flow rate of Ar gas blown in from a tundish upper nozzle of 2.8Nl/min to obtain a cast slab of a thickness of 250 mm and a width of 1600 mm.

The immersion nozzle used when casting was the immersion nozzle shown in FIG. 13. The cross-sectional shape of the immersion nozzle was a circle with an outside diameter of 150 and an inside diameter of 85 mm, the cross-sectional area of the opening of the discharge ports was 2829 mm$^2$, the slit width was 25 mm, and the angles $\theta_1$ and $\theta_2$ were both 45°. The material of the inner bore was alumina graphite.

The length from the top end of the inner bore to the top ends of the discharge ports was 590 mm, and the inner bore was straight in shape.

During casting, there was no sticking of inclusions on the immersion nozzle and there was no problem with operability. However, at the casting mold short side copper plates, a maximum 300J/(m$^2$·s·K) difference of coefficient of heat transfer occurred. This was over the uneven flow judgment criteria of 250J/(m$^2$·s·K), so it was judged that uneven flow occurred.

The cast cast slab was cut to a length of 10000 mm to obtain 1 coil unit. The surface of this cast slab was examined by a CCD camera. The pinhole defects were evaluated by the number present per square meter cast slab surface area.

Next, this cast slab was hot rolled and cold rolled by ordinary methods to finally obtain a coil of cold rolled steel sheet of a thickness of 0.8 mm and a width of 1600 mm.

The steel sheet quality was visually inspected on the inspection line after cold rolling and was evaluated by the number of surface flaws occurring per coil.

As a result, the cast slab had 15 pinhole defects/m$^2$, while the steel sheet had 3 surface flaws/coil.

As explained above, according to the present invention, it is possible to prevent nozzle clogging and possible to produce an ultralow carbon cast slab not giving rise to surface flaws even if processed into thin-gauge steel sheet.

Accordingly, the present invention has a high applicability in the steelmaking industry.

**Claims**

1. A method of production of an ultralow carbon cast slab **characterized by** adding Ti to molten steel decarburized to a carbon concentration of 0.01 mass% or less, further adding at least one of Ce, La, and Nd, and using an immersion nozzle (1) to inject the above molten steel from a tundish to a casting mold for continuous casting while maintaining a flow rate of Ar gas blown from any location in a range from a tundish upper nozzle to discharge ports of said immersion nozzle (1) at 3Nl/min or less so that the uneven distribution of the molten steel flow rate is eliminated.

2. A method of production of an ultralow carbon cast slab as set forth in claim 1, **characterized in that** said immersion nozzle (1) has an orifice (21) in its inner bore (10).

3. A method of production of an ultralow carbon cast slab as set forth in claim 2, **characterized in that** said inner bore (10) has a circular cross-sectional shape and

   (i) a relation $3 \leq R-r \leq 30$ stands between a radius R of a top end of the inner bore [mm] and a smallest radius r of the orifice [mm] and
   (ii) a length L from a top end to a bottom end of the orifice [mm] is $50 \leq L \leq 150$.

4. A method of production of an ultralow carbon cast slab as set forth in claim 2, **characterized in that** said inner bore (10) has an elliptical cross-sectional shape and

   (i) a relation $3 \leq A-a \leq 30$ stands between a radius A of a long-axis direction of a top end of the inner bore [mm] and a smallest radius $\underline{a}$ of the orifice (21) [mm] and
   (ii) a length L from a top end to a bottom end of the orifice (21) [mm] is $50 \leq L \leq 150$.

5. A method of production of an ultralow carbon cast slab as set forth in claim 1 or 2, **characterized in that** said immersion nozzle (1) has a closed bottom cylindrical shape and

   (i) two discharge ports (2) are arranged at axially symmetric positions to a cylinder at a bottom part of side walls of the cylindrical shape and
   (ii) a slit (3) is provided connecting a cylinder bottom part and bottom parts of the two discharge ports (2) and opening to the outside.

6. A method of production of an ultralow carbon cast slab as set forth in claim 5, **characterized in that**, in said immersion nozzle,

   (i) portions (4, 6) contiguous with the slit (3) of the cylinder bottom part are inclined upward toward the cylinder side walls (5),
   (ii) portions contiguous with the slit of discharge port bottom parts are inclined upward toward discharge port side walls, and
   (iii) there is no step difference between the surface forming the cylinder bottom part and the surfaces forming the discharge port bottom parts.

7. A method of production of an ultralow carbon cast slab as set forth in claim 6, **characterized in that**, in said immersion nozzle (1), an inclination angle by which "portions contiguous with the slit" of the cylinder bottom part head toward the cylinder side walls and an inclination angle by which "portions contiguous with the slit" of the discharge port bottom parts head toward discharge port side walls are both at least 30° upward.

8. A method of production of an ultralow carbon cast slab as set forth in any one of claims 5 to 7, **characterized in that**, in said immersion nozzle, portions (8) of the top parts of the discharge ports contiguous with the side walls (5) of the cylinder are formed by curved surfaces (11) smoothly contiguous with the side walls (5) of the cylinder.

9. A method of production of an ultralow carbon cast slab as set forth in any one of claims 5 to 8, **characterized in that** said immersion nozzle (1) is provided with a rib (22) connecting the two side surfaces of the slit (3).

**10.** A method of production of an ultralow carbon cast slab as set forth in any one of claims 5 to 9, **characterized in that**, in said immersion nozzle (1), the slit (3) has an opening width of 0.15 to 0.40 of a square root of the cross-sectional area of the discharge port openings.

**11.** A method of production of an ultralow carbon cast slab as set forth in any one of claims 1 to 10, **characterized in that**, in said immersion nozzle (1), the side surfaces and bottom part of the cylinder and part or all of the surfaces of the discharge ports and slit contiguous with the melt are formed by a material of any of carbon-less spinel, low-carbon spinel, magnesia graphite, zirconia graphite, and silica-less alumina graphite.

**Patentansprüche**

**1.** Verfahren zur Herstellung einer extrem kohlenstoffarmen Gussbramme, **gekennzeichnet durch** Zugeben von Ti zu Stahlschmelze, die auf eine Kohlenstoffkonzentration von höchstens 0,01 Masse-% entkohlt ist, ferner Zugeben von Ce, La und/ oder Nd und Verwenden eines Tauchrohrs (1), um die obige Stahlschmelze aus einer Gießwanne in eine Gießform zum Stranggießen einzuspritzen, während eine Strömungsgeschwindigkeit von Ar-Gas, das von irgendeiner Stelle in einem Bereich von einer oberen Gieswannendüse zu Ausgusslöchern des Tauchrohrs (1) geblasen wird, auf höchstens 3 Nl/min gehalten wird, so dass die ungleichmäßige Verteilung der Stahlschmelzen-Strömungsgeschwindigkeit beseitigt wird.

**2.** Verfahren zur Herstellung einer extrem kohlenstoffarmen Gussbramme nach Anspruch 1, **dadurch gekennzeichnet, dass** das Tauchrohr (1) eine Öffnung (21) in seiner Innenbohrung (10) hat.

**3.** Verfahren zur Herstellung einer extrem kohlenstoffarmen Gussbramme nach Anspruch 2, **dadurch gekennzeichnet, dass**
die Innenbohrung (10) eine kreisförmige Querschnittform hat und

(i) eine Beziehung $3 \leq R\text{-}r \leq 30$ zwischen einem Radius R [mm] eines oberen Endes der Innenbohrung und einem kleinsten Radius r [mm] der Öffnung gilt und
(ii) eine Länge L [mm] von einem oberen Ende zu einem unteren Ende der Öffnung $50 \leq L \leq 150$ beträgt.

**4.** Verfahren zur Herstellung einer extrem kohlenstoffarmen Gussbramme nach Anspruch 2, **dadurch gekennzeichnet, dass**
die Innenbohrung (10) eine elliptische Querschnittform hat und

(i) eine Beziehung $3 \leq A\text{-}a \leq 30$ zwischen einem Radius A [mm] einer Hauptachsenrichtung eines oberen Endes der Innenbohrung und einem kleinsten Radius a [mm] der Öffnung (21) gilt und
(ii) eine Länge L [mm] von einem oberen Ende zu einem unteren Ende der Öffnung (21) $50 \leq L \leq 150$ beträgt.

**5.** Verfahren zur Herstellung einer extrem kohlenstoffarmen Gussbramme nach Anspruch 1 oder 2, **dadurch gekennzeichnet, dass**
das Tauchrohr (1) eine Zylinderform mit geschlossenem Boden hat und

(i) zwei Ausgusslöcher (2) an axial symmetrischen Positionen zu einem Zylinder an einem Bodenteil von Seitenwänden der Zylinderform angeordnet sind und
(ii) ein Schlitz (3) vorgesehen ist, der ein Zylinderbodenteil und Bodenteile der beiden Ausgusslöcher (2) verbindet und sich nach außen öffnet.

**6.** Verfahren zur Herstellung einer extrem kohlenstoffarmen Gussbramme nach Anspruch 5, **dadurch gekennzeichnet, dass** im Tauchrohr

(i) Abschnitte (4, 6), die an den Schlitz (3) des Zylinderbodenteils angrenzen, zu den Zylinderseitenwänden (5) nach oben geneigt sind,
(ii) Abschnitte, die an den Schlitz von Ausgussloch-Bodenteilen angrenzen, zu Ausgussloch-Seitenwänden nach oben geneigt sind und
(iii) keine Stufendifferenz zwischen der das Zylinderbodenteil bildenden Oberfläche und den die Ausgussloch-Bodenteile bildenden Oberflächen vorhanden ist.

**7.** Verfahren zur Herstellung einer extrem kohlenstoffarmen Gussbramme nach Anspruch 6, **dadurch gekennzeichnet, dass** im Tauchrohr (1) ein Neigungswinkel, in dem "an den Schlitz angrenzende Abschnitte" des Zylinderbodenteils zu den Zylinderseitenwänden weisen, und ein Neigungswinkel, in dem "an den Schlitz angrenzende Abschnitte" der Ausgussloch-Bodenteile zu Ausgussloch-Seitenwänden weisen, beide mindestens 30° nach oben betragen.

**8.** Verfahren zur Herstellung einer extrem kohlenstoffarmen Gussbramme nach einem der Ansprüche 5 bis 7, **dadurch gekennzeichnet, dass** im Tauchrohr Abschnitte (8) der Oberteile der Ausgusslöcher, die an die Seitenwände (5) des Zylinders angrenzen, durch gekrümmte Oberflächen (11) gebildet sind, die an die Seitenwände (5) des Zylinders glatt angrenzen.

**9.** Verfahren zur Herstellung einer extrem kohlenstoffarmen Gussbramme nach einem der Ansprüche 5 bis 8, **dadurch gekennzeichnet, dass** das Tauchrohr (1) mit einer Rippe (22) versehen ist, die die beiden Seitenflächen des Schlitzes (3) verbindet.

**10.** Verfahren zur Herstellung einer extrem kohlenstoffarmen Gussbramme nach einem der Ansprüche 5 bis 9, **dadurch gekennzeichnet, dass** im Tauchrohr (1) der Schlitz (3) eine Öffnungsbreite vom 0,15- bis 0,40-fachen einer Quadratwurzel der Querschnittfläche der Ausgusslochöffnungen hat.

**11.** Verfahren zur Herstellung einer extrem kohlenstoffarmen Gussbramme nach einem der Ansprüche 1 bis 10, **dadurch gekennzeichnet, dass** im Tauchrohr (1) die Seitenflächen und das Bodenteil des Zylinders sowie ein Teil oder alle Oberflächen der Ausgusslöcher und des Schlitzes, die an die Schmelze angrenzen, durch ein Material aus kohlenstofffreiem Spinell, kohlenstoffarmem Spinell, Magnesiumoxid-Graphit, Zirkonoxid-Graphit oder siliziumoxidfreiem Aluminiumoxid-Graphit gebildet sind.

## Revendications

**1.** Procédé de production d'une plaque coulée à teneur en carbone ultra faible **caractérisé par** l'addition de Ti à de l'acier fondu décarburé à une concentration en carbone de 0,01 % en masse ou inférieure, l'addition supplémentaire d'au moins un de Ce, La, et Nd, et l'utilisation d'une buse d'immersion (1) pour injecter l'acier fondu ci-dessus à partir d'un panier de coulée vers un moule de coulée pour une coulée continue tout en maintenant un débit de gaz d'Ar soufflé à partir d'un endroit quelconque dans un intervalle allant d'une buse supérieure de panier de coulée vers des orifices de décharge de ladite buse d'immersion (1) à 3Nl/min ou inférieur de sorte que la distribution irrégulière du débit d'acier fondu est éliminée.

**2.** Procédé de production d'une plaque coulée à teneur en carbone ultra faible selon la revendication 1, **caractérisé en ce que** ladite buse d'immersion (1) présente un orifice (21) dans sa perforation interne (10).

**3.** Procédé de production d'une plaque coulée à teneur en carbone ultra faible selon la revendication 2, **caractérisé en ce que**
ladite perforation interne (10) présente une forme transversale circulaire et

(i) une relation $3 \leq R\text{-}r \leq 30$ se trouve entre un rayon R d'une extrémité haute de la perforation interne [mm] et le rayon le plus petit r de l'orifice [mm] et
(ii) une longueur L à partir d'une extrémité haute jusqu'à une extrémité de fond de l'orifice [mm] est $50 \leq L \leq 150$.

**4.** Procédé de production d'une plaque coulée à teneur en carbone ultra faible selon la revendication 2, **caractérisé en ce que**
ladite perforation interne (10) présente une forme transversale elliptique et

(i) une relation $3 \leq A\text{-}a \leq 30$ se trouve entre un rayon A d'une direction d'axe long d'une extrémité haute de la perforation interne [mm] et le rayon le plus petit $a$ de l'orifice (21) [mm] et
(ii) une longueur L à partir d'une extrémité haute jusqu'à une extrémité de fond de l'orifice (21) [mm] est $50 \leq L \leq 150$.

**5.** Procédé de production d'une plaque coulée à teneur en carbone ultra faible selon la revendication 1 ou 2, **caractérisé en ce que**
ladite buse d'immersion (1) présente une forme cylindrique de fond fermée et

(i) deux orifices de décharge (2) sont disposés à des positions axialement symétriques par rapport à un cylindre sur une partie de fond de parois latérales de la forme cylindrique et

(ii) une fente (3) est fournie connectant une partie de fond de cylindre et des parties de fond des deux orifices de décharge (2) et une ouverture vers l'extérieur.

6. Procédé de production d'une plaque coulée à teneur en carbone ultra faible selon la revendication 5, **caractérisé en ce que** dans ladite buse d'immersion,

(i) des portions (4, 6) contiguës avec la fente (3) de la partie de fond de cylindre sont inclinées vers le haut vers les parois latérales de cylindre (5),

(ii) des portions contiguës avec la fente de parties de fond d'orifices de décharge sont inclinées vers le haut vers des parois latérales d'orifices de décharge, et

(iii) il n'y a pas de différence de niveau entre la surface formant la partie de fond de cylindre et les surfaces formant les parties de fond d'orifices de décharge.

7. Procédé de production d'une plaque coulée à teneur en carbone ultra faible selon la revendication 6, **caractérisé en ce que**, dans ladite buse d'immersion (1), un angle d'inclinaison selon lequel "portions contiguës avec la fente" de la partie de fond de cylindre avancent vers les parois latérales de cylindre et un angle d'inclinaison selon lequel "portions contiguës avec la fente" des parties de fond d'orifices de décharge avancent vers les parois latérales d'orifices de décharge sont tous deux d'au moins 30°.

8. Procédé de production d'une plaque coulée à teneur en carbone ultra faible selon l'une quelconque des revendications 5 à 7, **caractérisé en ce que**, dans ladite buse d'immersion, des portions (8) des parties hautes des orifices de décharge contiguës aux parois latérales (5) du cylindre sont formées par des surfaces courbées (11) régulièrement contiguës avec les parois latérales (5) du cylindre.

9. Procédé de production d'une plaque coulée à teneur en carbone ultra faible selon l'une quelconque des revendications 5 à 8, **caractérisé en ce que** ladite buse d'immersion (1) est munie d'une nervure (22) connectant les deux surfaces latérales de la fente (3).

10. Procédé de production d'une plaque coulée à teneur en carbone ultra faible selon l'une quelconque des revendications 5 à 9, **caractérisé en ce que**, dans ladite buse d'immersion (1), la fente (3) présente une largeur d'ouverture de 0,15 à 0,40 d'une racine carrée de la section transversale des ouvertures d'orifices de décharge.

11. Procédé de production d'une plaque coulée à teneur en carbone ultra faible selon l'une quelconque des revendications 1 à 10, **caractérisé en ce que**, dans ladite buse d'immersion (1), les surfaces latérales et la partie de fond du cylindre et une partie ou la totalité des surfaces des orifices de décharge et de la fente contiguë avec la masse en fusion sont formées d'un matériau parmi un spinelle exempt de carbone, un spinelle à faible teneur en carbone, un graphite d'oxyde de magnésium, un graphite d'oxyde de zirconium, et un graphite d'alumine exempt de silice.

# Fig.1

# Fig.2

# Fig.3

# Fig.4

# Fig.5

# Fig.6

# Fig.7

# Fig.8

# Fig.9

## Fig.10

## Fig.11

(a)

(b)

(c)

Fig.12

Fig.13

39
EP 1 952 913 B1

Fig.14

# Fig.15

# Fig.16

Fig.17

EP 1 952 913 B1

Fig.18

Fig.19

Fig. 20

EP 1 952 913 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001239351 A
- JP 2004255407 A
- JP 2002088412 A
- JP 2003049218 A
- JP 2003268435 A
- JP 2005060734 A
- JP 2005139492 A
- JP 11343516 A
- JP 60180654 A